# EUROPÄISCHE PATENTSCHRIFT

(11) **EP 2 198 589 B1**
(45) Veröffentlichungstag und Bekanntmachung des Hinweises auf die Patenterteilung: **11.05.2016**
(21) Anmeldenummer: 08803151.3
(22) Anmeldetag: 21.08.2008
(51) Int. Cl.: H04L 29/08, H04L 12/18

(54) **VERFAHREN ZUM AUSFÜHREN EINER AUF EINEM NETZWERKPROTOKOLL, INSBESONDERE TCP/IP UND/ODER UDP, AUFBAUENDEN MULTIMEDIALEN KOMMUNIKATION.**
METHOD FOR CARRYING OUT A MULTIMEDIA COMMUNICATION BASED ON A NETWORK PROTOCOL, PARTICULARLY TCP/IP AND/OR UDP
PROCÉDÉ POUR RÉALISER UNE COMMUNICATION MULTIMÉDIA REPOSANT SUR UN PROTOCOLE RÉSEAU, EN PARTICULIER SUR TCP/IP ET/OU UDP

(30) Priorität: 28.08.2007 DE 102007040574
(43) Veröffentlichungstag der Anmeldung: 23.06.2010
(73) Patentinhaber: Röder, Steffen, 36100 Petersberg (DE); Freiherr Von Werther, Philipp, 84066 Mallersdorf (DE); Brandenburg, Karlheinz, 98693 Ilmenau (DE); Brandenburg Ventures GmbH, 98693 Ilmenau (DE)
(72) Erfinder: Röder, Steffen, 99423 Weimar (DE); Freiherr von Werther, Philipp, 99423 Weimar (DE)
(74) Vertreter: Kruspig, Volkmar
(86) Internationale Anmeldenummer: PCT/EP2008/060986
(87) Internationale Veröffentlichungsnummer: WO 2009/027323

(56) Entgegenhaltungen:
- EP-A- 1 304 878
- WO-A-2007/055971
- US-A1- 2006 209 727
- US-A1- 2007 033 251

## Beschreibung

Die Erfindung betrifft ein Verfahren zum Ausführen einer auf einem Netzwerkprotokoll, insbesondere TCP/IP und/oder UDP, aufbauenden multimedialen Kommunikation nach dem Oberbegriff des Anspruchs 1.

Derartige Kommunikationen betreffen vor allem, aber nicht ausschließlich multimediale Datenübertragungen über das Internet bzw. über Internetdienste, Provider und die entsprechenden Hardwarekomponenten. Dies sind insbesondere Endgeräte in Form von Computern, mobilen PCs oder so genannten hand held-Geräten, die über Modem, ISDN oder Breitbandverbindungen mit einem Einwahlknoten in Verbindung stehen und über entsprechende Mittel, wie Browser, auf Webanwendungen zugreifen bzw. diese ausführen.

In der WO 03/034730 A1 wird ein diesbezügliches Verfahren zur Übertragung von Kommunikationsdaten und ein Video-Konferenz- und Video-Chat-System beschrieben. Die Druckschrift offenbart eine Übertragung von Bewegungsbilddaten zwischen zwei Endgeräten in einer paketvermittelten Kommunikation. Dabei weisen die Endgeräte Mittel zum Codieren und Decodieren der Bewegungsbilddaten in Verbindung mit Audio-Daten auf. Die Daten können dabei von einem Endgerät aufgenommen und in Echtzeit an eines oder mehrere Endgeräte übermittelt werden. Dies erfolgt so, indem die Video- und/oder Audio-Daten von jedem der beteiligten Endgeräte an einen gemeinsamen Server gesendet werden. Die gesendeten Video- und Audio-Daten werden für jedes Endgerät getrennt gesammelt, codiert und an empfangende Endgeräte kontinuierlich übertragen. Dabei kann jeder Teilnehmer an den empfangenden Endgeräten mehrere andere Teilnehmer als Live-Bilder auf einem Bildschirm an dessen Endgerät betrachten und zusätzlich mit diesen sowohl audio-visuell als auch in Textform kommunizieren.

Dieses Chatsystem kann mit Moderations-Funktionen ergänzt werden, bei denen ein mit besonderen Rechten ausgestatteter Teilnehmer anderen Teilnehmern Moderationsrechte einräumt oder entzieht, bzw. weitere Teilnehmer zuschaltet oder aus dem Chat ausschließt.

Das dort beschriebene Verfahren verwirklicht allerdings die zunehmend höheren, differenzierteren und komplexeren Kommunikationsbedürfnisse der daran teilnehmenden Nutzer nur sehr unvollkommen. Die Interaktion verschiedener Nutzer, die über Netzwerke wie beispielsweise dem Internet miteinander kommunizieren und Informationen bzw. Daten austauschen, hat in den letzten Jahren eine Komplexität erreicht, bei der von "sozialen Netzwerken" oder "Communities" gesprochen wird, die sich komplementär zu den mit Hilfe des Internets ausgebildeten Kommunikationsnetzen herausbilden. Ein Beispiel hierfür sind die Internetcommunities "MySpace" auf internationaler Ebene oder "StudiVZ" im deutschsprachigen Bereich.

Diese erfordern ganz andere und weitergehende bzw. flexiblere technische Mittel und Verfahren, die über die reinen Video-, Chat- und Konferenzsysteme hinausgehen und die bestehende Kontakte zwischen den Teilnehmern möglichst realitätsnah nachbilden müssen. Dies betrifft insbesondere die Art, wie sich Teilnehmer im Netz darstellen, begegnen und finden, sich zu Sub-Netzwerken mit eigener kollektiver Identität zusammenschließen, dort in geschlossenen oder halb offenen Bereichen kommunizieren und sich somit gegenüber dem größeren Netzwerk abgrenzen und nach außen hin auftreten.

Dabei geht fortschreitend die bislang geltende scharfe Trennung zwischen dem Anbieter einer Webseite und dem Nutzer der Webseite verloren. Jeder der Teilnehmer eines derartigen sozialen Netzwerkes bzw. einer derartigen Community ist gleichzeitig ein Teilnehmer unter vielen. Andererseits ist er wiederum befähigt, eigene Informationen einzustellen, zu pflegen und selbst zu bestimmen, wer unter welchen Bedingungen diese Informationen abrufen darf.
Die gegenwärtigen Video- und Chatsysteme sind für diese umfangreichen neuen Erfordernisse nicht geeignet und erweisen sich hierfür als zu beschränkt.

Es besteht daher die Aufgabe, die Beschränkungen der bisher bekannten Video- und Chat-Systeme aufzuheben und die Grundfunktionen derartiger Systeme so zu erweitern und auszubauen, dass sich damit soziale Netzwerke und webbasierte Communities in einer möglichst flexiblen Weise realisieren lassen.

Die Aufgabe wird mit einem Verfahren zum Ausführen einer auf einem Netzwerkprotokoll, insbesondere TCP/IP und/oder UDP, aufbauenden multimedialen Kommunikation, insbesondere eines Video-, Audio- und/oder Text-Chats, zwischen einer Gesamtheit von in einem Kommunikationsnetz angeordneten Endgeräten gelöst, das sich durch folgendes erfindungsgemäßes Merkmal auszeichnet:
Es wird durch mindestens einen Teilnehmer ein personalisiertes Nutzer Account in Form eines virtuellen Teilnehmerprofils auf mindestens einem Server erzeugt. Dabei erfolgt an jedem der Endgeräte über ein Einrichten des personalisierten Teilnehmerprofils ein Einrichten der multimedialen Kommunikation. Über dieses Einrichten wird ein Modus einer der Kommunikation vorausgehenden Teilnehmerwahl, ein Kommunikationstyp und/oder eine Anzahl von mit einem der Endgeräte bestehenden Kommunikationsverbindungen und/oder die Art der bei der Kommunikation erfolgenden Datenübertragung frei festgelegt.

Bevor es somit zum Ausführen der multimedialen Kommunikation kommt, richtet jeder Teilnehmer zunächst ein personalisiertes Nutzeraccount in Form eines virtuellen Teilnehmerprofils auf mindestens einem Server oder in einem Peer to Peer Netzwerk ein. Das personalisierte Nutzeraccount wird in Form eines virtuellen Teilnehmerprofils erzeugt. Das bedeutet, dass dem Teilnehmer neben den grundlegenden Account-Funktionen wie beispielsweise einer Passwortwahl oder eine Speicherreservierung, Mittel zur Verfügung gestellt werden, um sich und seine Person umfassend innerhalb des Netzwerkes darzustellen. Dies betrifft insbesondere ein Hochladen eines Bildes, eines Textes zur Selbstdarstellung, besonderen Mitteln zur Veränderung des Erscheinungsbildes in der Anzeige des Teilnehmerprofils und derartige Funktionen mehr.

Der Account beschreibt somit die Identität eines Teilnehmers innerhalb des Verfahrens. Der Account beinhaltet insbesondere: Anmeldedaten, Kontakte, das Profil, Vermittlungs- bzw. verwaltungsrelevante Daten und sonstige Einträge.

Über ein Einrichten dieses erzeugten virtuellen Teilnehmerprofils wird sodann an jedem Endgerät die auszuführende multimediale Kommunikation des Teilnehmers eingerichtet. Das Teilnehmerprofil legt dadurch fest, mit welchem Teilnehmer der Inhaber des Teilnehmerprofils auf welche Art, in welcher Anzahl und auf welche Weise kommunizieren will. Dabei geht es darum, durch die Angaben im Teilnehmerprofil Präferenzen und grundlegende Parameter vorzugeben, unter denen der Teilnehmer multimedial kommunizieren möchte. Das Teilnehmerprofil bestimmt dabei den Modus der Teilnehmerwahl, der der Kommunikation vorausgeht, den Typ der Kommunikation und die Anzahl der Kommunikationsverbindungen bzw. die Art der Datenübertragungen.

Der Modus der Teilnehmerwahl enthält dabei bei einer ersten Ausführungsform ein aktivierbares Zufallsverfahren zum Herstellen einer Kommunikationsverbindung zwischen einem wählenden Endgerät eines ersten Teilnehmerprofils zu mindestens einem weiteren Endgerät eines zufälligen Teilnehmerprofils.

Damit wird ein "zufälliges Begegnen" zweier durch ihre Teilnehmerprofile ausgezeichneten Teilnehmer ermöglicht. Die Teilnehmerwahl wird dabei nach Belieben der Teilnehmer so ausgeführt, dass ein erster Teilnehmer mit irgendeinem zufällig ausgewählten anderen Teilnehmer verbunden wird und mit diesem kommunizieren kann. Dies bedingt einen gewissen an den alltäglichen Umgang angelehnten Überraschungseffekt.

Der Modus der Teilnehmerwahl kann bei einer weiteren Ausführungsform ein aktivierbares Suchverfahren zum Herstellen einer Kommunikationsverbindung zwischen dem wählenden Endgerät des ersten Teilnehmerprofils zu mindestens einem weiteren Endgerät eines durch ein Eingeben von Suchparametern ermittelten Teilnehmerprofils enthalten.

Dem Teilnehmer wird dadurch die Möglichkeit geboten, mit einem Teilnehmer zu kommunizieren, dessen Teilnehmerprofil eingegebenen Suchkriterien entspricht und der daher gleichartige Interessen wie der wählende Teilnehmer aufweist. Der Modus der Teilnehmerwahl enthält bei einer weiteren Ausführungsform ein aktivierbares Aufrufverfahren zum Herstellen einer Kommunikationsverbindung zwischen dem wählenden Endgerät des ersten Teilnehmerprofils zu mindestens einem weiteren Endgerät eines in einer Auswahlliste gespeicherten Teilnehmerprofils.

Mit dieser Ausführungsform bietet sich dem Teilnehmer die Möglichkeit, eine oder mehrere Teilnehmer, genauer gesagt deren Teilnehmerprofile, vorzumerken oder gewisse voreingestellte oder für jeden Teilnehmer wichtige Kommunikationspartner auszuwählen und mit diesen eine Kommunikationsverbindung aufzubauen. Dies bedeutet insbesondere, dass ein Teilnehmer Freunde oder Bekannte bzw. andere für ihn interessante Personen vormerken kann, ohne diese jedes Mal neu suchen zu müssen.

Bei einer weiteren Ausführungsform enthält der Modus der Teilnehmerwahl eine aktivierbare Blockierfunktion zum Vermeiden und/oder Abweisen eine Kommunikationsanfrage von dem wählenden Endgerät des ersten Teilnehmerprofils zu mindestens einem weiteren Endgerät eines in einer Blackliste gespeicherten Tei Inehmerprofils.

Bei dieser Ausführungsform kann der Teilnehmer anderen Teilnehmern eine Kommunikation mit ihm von vornherein ausschließen, indem er deren Teilnehmerprofile geeignet vormerkt. Dabei werden dann alle Kommunikationsanfragen der entsprechenden Teilnehmer abgewiesen oder der Teilnehmer selbst schließt von sich aus jeden eigenen Verbindungsversuch mit den entsprechenden Teilnehmerprofilen aus.

Für jedes der Endgeräte ist dabei eine durch mindestens ein Teilnehmerprofil bestimmte jeweils eigene, frei veränderbare Auswahlliste und/oder Blackliste vorgesehen. Das bedeutet, dass ein Teilnehmer dann auf dem Endgerät, an dem er sich gerade befindet oder von dem aus er sich gerade angemeldet hat, über dessen Teilnehmerprofil eine jeweils für dieses Endgerät gültige Auswahlliste oder Blackliste definiert. Der Teilnehmer kann daher nicht eigene oder fremde Auswahllisten dadurch umgehen, indem er einfach ein anderes Endgerät nutzt.

Über das Einrichten des Teilnehmerprofils ist bei einer Ausführungsform der Typ der bestehenden Kommunikation an jedem der Endgeräte zwischen einem One-to-one-Typ, einem One-to-many-Typ, einem Many-to-one-Typ oder einem Many-to-many-Typ umschaltbar.

Der One-to-one-Typ entspricht einer Kommunikation von Teilnehmer zu Teilnehmer bzw. von einem Endgerät zu einem anderen Endgerät, die "unter vier Augen" ausgeführt wird. Der One-to-many-Typ entspricht einer Kommunikation zwischen einem Teilnehmer zu mehreren Teilnehmern gleichzeitig, bzw. zwischen einem Endgerät und mehreren anderen Endgeräten, wobei der Teilnehmer eher als Sender auftritt. Dieser Kommunikationstyp entspricht beispielsweise dem Senden eines Streams und unterscheidet sich vom Many-to-one-Typ dadurch, dass bei letzterem der Teilnehmer eher ein Empfänger für mehrere andere sendende Teilnehmer ist. Der Many-to-many-Typ entspricht dem Typ eines öffentlich oder für mehrere Teilnehmer zugänglichen, im wesentlichen hierarchielosen Chats oder eine Konferenzschaltung, bei dem quasi jeder mit jedem kommuniziert.

Bei einer weiteren Ausführungsform ist über das Einrichten des Teilnehmerprofils bei dem Ausführen einer Kommunikation zwischen einem ersten Endgerät und einem zweiten Endgerät nach dem One-to-one-Typ eine Kommunikation in einem Pseudo-One-to-one-Typ ausführbar. Dabei ist mindestens eine weitere parallele Kommunikation nach dem One-to-one-Typ zwischen dem ersten und mindestens einem weiteren Endgerät möglich.

Bei diesem Kommunikationstyp schaltet der Teilnehmer bei einer laufenden One-to-one-Kommunikation mindestens eine weitere One-to-one-Kommunikation mit mindestens einem weiteren Teilnehmer dazu und baut somit mehrere One-to-one-Kommunikationen auf, die gleichzeitig und parallel zueinander ablaufen.

Bei einer weiteren Ausführungsform ist über das Einrichten des Teilnehmerprofils bei dem Ausführen einer Kommunikation nach dem One-to-many-Typ eine Kommunikation zwischen dem Endgerät eines Actor-Teilnehmerprofils und einer Viewer-Gesamtheit aus den Endgeräten mehrerer Viewer-Teilnehmerprofile ausführbar. Als Actor wird nachfolgend ein Teilnehmer bezeichnet, der seinen Mediastream für ein breites Publikum zugänglich macht.

Bei diesem Kommunikationstyp wird ein Teilnehmerprofil als Actor-Teilnehmerprofil eingerichtet. Die Viewer-Gesamtheit entsteht dadurch, dass auf dem Actor-Teilnehmerprofil andere Teilnehmerprofile zweckmäßig definiert werden. Die Kommunikation erfolgt nun so, dass das Actor-Teilnehmerprofil allgemein an die Viewer-Gesamtheit sendet bzw. mit dieser kommuniziert, ohne dass einzelne Teilnehmerprofile aufgerufen bzw. angewählt werden müssen.

Bei einer weiteren Ausführungsform ist über das Einrichten des Teilnehmerprofils bei dem Ausführen einer Kommunikation nach dem Many-to-One-Typ eine Kommunikation zwischen dem Endgerät eines Viewer-Teilnehmerprofils und einer Actor-Gesamtheit aus den Endgeräten mehreren Actor-Teilnehmerprofile ausführbar.

Dabei definiert ein Teilnehmer auf dessen Teilnehmerprofil eine Gesamtheit aus mehreren anderen Teilnehmerprofilen, von denen er Informationen bzw. Daten empfangen möchte. Diese so definierte Gesamtheit bildet nun die Actor-Gesamtheit, von der jeder Teilnehmer in der Lage ist, Daten zu senden. Der Tei Inehmer muss dabei nicht jedes einzelne andere Teilnehmerprofil einzeln anwä hlen, sondern erhält somit einen globalen Zugriff auf alle möglichen Sender innerhalb des Netzwerkes.

Bei einer weiteren Ausführungsform wird über das Einrichten des Teilnehmerprofils bei einer Kommunikation nach dem Many-to-many-Typ eine Kommunikation innerhalb eines durch eine Menge vorab definierter Teilnehmerprofile festgelegten Endgerätepools ausgeführt, wobei jedes der Endgeräte mit jedem der Endgeräte des Endgerätepools eine Kommunikation ausführt.

Hierbei wird eine Wahl einer Gesamtheit von Teilnehmerprofilen nach frei wählbaren Gesichtspunkten ein Endgerätepool definiert, innerhalb dem jeder mit jedem eine Kommunikation ausführen kann. Dies entspricht einer multimedialen Konferenzschaltung in einem abgegrenzten, frei definierbaren Teilbereich der Teilnehmermenge.

Die zu der Viewer-Gesamtheit, der Actor-Gesamtheit und/oder zu dem Endgerätepool gehörenden Teilnehmerprofile sind durch das mindestens eine Actor-Teilnehmerprofil, das mindestens eine Viewer-Teilnehmerprofil oder durch mindestens einen Moderator frei festlegbar. Das bedeutet, dass jeder Teilnehmer selbst entscheiden kann, ob er zu der erwähnten Gesamtheit gehören will oder nicht. Darüber hinaus kann der Moderator ein Teilnehmerprofil zu den erwähnten Gesamtheiten hinzufügen oder aus diesen entfernen.

Die frei wählbare Art der bei der Kommunikation erfolgenden Datenübertragung enthält bei einer ersten Ausführungsform eine Auswahl zwischen einer Kommunikation in Echtzeit und/oder einem Senden bzw. Empfangen eines Streams.

Bei einer weiteren Ausführungsform enthält die frei wählbare Art der bei der Kommunikation erfolgenden Datenübertragung eine Auswahl zwischen verschiedenen Kommunikationskanälen, insbesondere einem Video-, einem Audio- und/oder einem Textkanal, sowie einem Kanal für einen Dateitransfer oder einen gemeinsamen Zugriff auf Webanwendungen.

Die vorhergehend erwähnte Kommunikation ist bei einer zweckmäßigen Ausführungsform durch einen Informations- und Rückmeldekanal ergänzt. Dieser kann zur Übertragung von Metadaten genutzt werden.

Die in dem Kommunikationsnetz angeordneten Endgeräte und die zwischen den Endgeräten ausgeführte Kommunikation werden durch mindestens einen Server oder über ein Peer to Peer Netzwerk verwaltet. Die Datenübertragung erfolgt über mindestens einen Server oder über ein Peer to Peer Netzwerk. Dabei wird über das mindestens eine, vorzugsweise durch den Server verwaltete Teilnehmerprofil eine logische Zuordnung zwischen jeweils mindestens einem Endgerät und einem das Endgerät nutzenden Teilnehmer ausgeführt. In Verbindung damit erfolgt eine Adressierung des jeweiligen Endgerätes über die logische Zuordnung des Endgerätes zum Teilnehmerprofil.

Durch das mindestens eine Teilnehmerprofil werden bei einer zweckmäßigen Ausführungsform Tag-Variablen zum Festlegen grundlegender Kommunikationsfunktionen, insbesondere für Freigabe- und Sperrfunktionen, gesetzt und verändert. Die Tag-Variablen sind besondere, auf dem Teilnehmerprofil erscheinende und leicht zu erfassende Stichwörter bzw. Parameter, die den Teilnehmer und seine Interessen beschreiben. Die Vergabe der Freigabe- und Sperrfunktionen bilden somit einen Teil der Selbstdarstellung des Teilnehmers und können somit auch Zugriffsobjekte für Suchfunktionen sein.

Durch das mindestens eine Teilnehmerprofil werden allgemeine Teilnehmerdaten, insbesondere Personendaten und Daten für eine Selbstdarstellung des Teilnehmers, eingegeben und angezeigt. Bei einer vorteilhaften Ausführungsform wird durch das mindestens eine Teilnehmerprofil mindestens ein Link zu mindestens einem weiteren Teilnehmerprofil und/oder einem Stream, eingegeben und verändert. Das Teilnehmerprofil verweist dadurch auf einen Stream, der an eine Vielzahl anderer Teilnehmerprofile ausgegeben werden kann. Dadurch wird das Tei Inehmerprofil zu einem vorhergehend bereits erwähnten Actor-Tei Inehmerprofil.

Zweckmäßigerweise ist das mindestens eine Teilnehmerprofil so ausgebildet, dass ein durch einen Teilnehmer erfolgendes Einbinden eigener Daten oder Daten von Drittanbietern, insbesondere Dateien, Plugins und Internetdiensten, ausführbar ist. Damit kann das Teilnehmerprofil durch attraktive und nützliche Ausgestaltungen ergänzt werden.

Das erfindungsgemäße Verfahren soll nun nachfolgend anhand einer beispielhaften Ausführungsform näher erläutert werden. Zur Verdeutlichung dienen die beigefügten Figuren 1 bis 11. Es zeigt
- Fig. 1: ein schematisches Schichtenmodell des Kommunikationsverfahrens,
- Fig. 1a: eine beispielhafte Gerätekonfiguration für eine Client-Server-Architektur zum Ausführen des Verfahrens,
- Fig. 2: eine schematische Darstellung eines dem Verfahren zugrunde liegenden Poolprinzips,
- Fig. 3a: ein Poolschema für einen single-connect-Modus,
- Fig. 3b: ein Poolschema für zwei verschiedene multi-connect-Modi,
- Fig. 4a: eine beispielhafte erste Bildbearbeitungsfunktion,
- Fig. 4b: eine beispielhafte zweite Bildbearbeitungsfunktion,
- Fig. 5a: ein beispielhaftes Anzeigefenster für einen single-connect im multi-Teilnehmer-Modus,
- Fig. 5b: ein beispielhaftes Panel für einen Textchat,
- Fig. 5c: ein beispielhaftes Profil-Panel,
- Fig. 6: ein beispielhaftes Friends-Panel,
- Fig. 7a: ein erstes beispielhaftes Panel für einen multi-connect-Modus,
- Fig. 7b: ein zweites beispielhaftes Panel für einen multi-connect-Modus,
- Fig. 7c: ein drittes beispielhaftes Panel für einen multi-connect-Modus,
- Fig. 8: ein beispielhaftes Panel für einen gemischten multi-connect und single-Modus mit einem Hauptmenü,
- Fig. 9: eine beispielhafte Panelgruppe zum Einrichten und Ausführen eines single-connect-Modus,
- Fig. 10: eine beispielhafte Panelgruppe zum Einrichten und Ausführen eines multi-connect-Modus,
- Fig. 11: eine beispielhafte Darstellung eines Teilnehmer-Events.

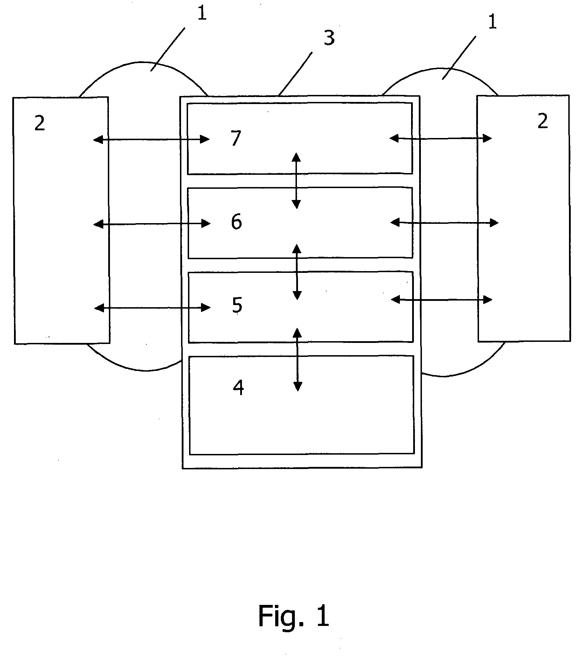

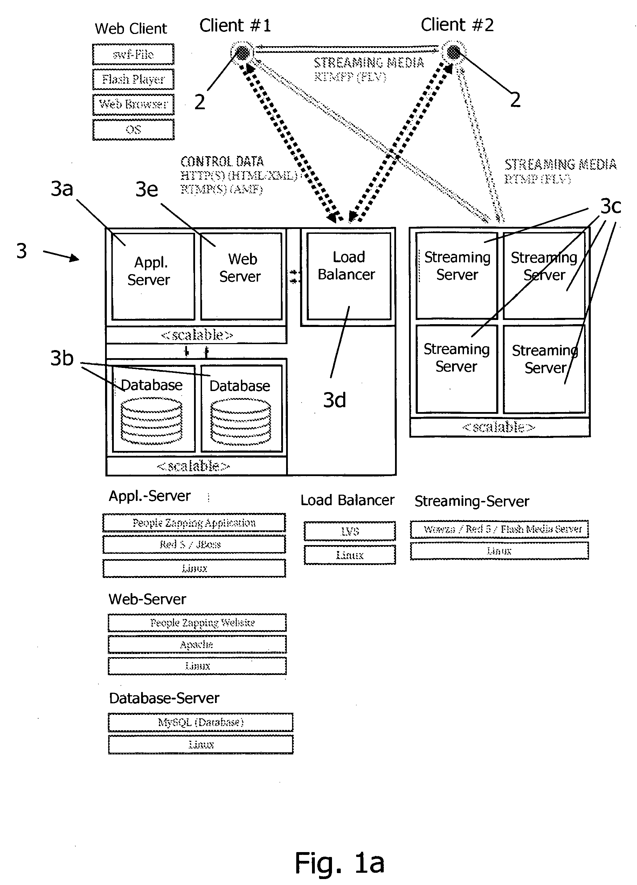

Fig. 1 zeigt ein beispielhaftes Schichtenmodell, das dem erfindungsgemäßen Kommunikationsverfahren zugrunde liegt. Das für das Verfahren genutzte Kommunikationsnetz ist typischerweise das Internet 1 mit dem darauf zugeschnittenen paketorientierten Kommunikationsprotokoll TCP/IP bzw. UDP. Eine Reihe von Endgeräten 2, typischerweise stationäre oder mobile Personal Computer, Notebooks, aber auch internetfähige Handheld-Geräte wie PDA oder Mobiltelefone, kommunizieren mit einem Server 3. Die Funktionen des Servers können teilweise oder vollständig durch ein Peer-to-peer-Netzwerk realisiert sein. Die Kommunikation der Endgeräte 2 mit dem Server 3 oder dem P2P-Netz erfolgt zweckmäßigerweise über Schnittstellen und Protokolle, die auf die verwendeten Netzprotokolle zugreifen, bzw. auf diesem aufbauen. Die Endgeräte enthalten hierzu einen Browser mit den entsprechenden Erweiterungen, die als Plug-In bezeichnet werden. Der Server enthält Mittel zum Betreiben eines Webservers, entsprechende Programme für die nachfolgend beschriebenen Funktionalitäten und Mittel zum Betreiben einer Datenbank. Bei der Ausgestaltung der Anordnung als Peer-to-peer-Netzwerk werden diese Funktionen über die in dem Netzwerk beteiligten Rechner teilweise oder vollständig verteilt.

Die durch den Server 3 ausgeführte Webanwendung kann sowohl durch eine Standalone-Architektur, als auch als eine integrierte Architektur realisiert sein.

Die dem Verfahren zugrundeliegenden Webanwendungen sind Teil des Servers 3 bzw. Bestandteil eines von diesem Server interpretierten Skripts bzw. einer von dem P2P-Netz gemeinsam ausgeführten Anwendung. Die Implementierung dieses Skripts oder der P2P-Anwendung erfolgt dabei durch die bekannten Skriptsprachen wie PHP, Perl, Python im Rahmen sogenannter Module, Servlets unter Verwendung von Java oder durch Java Serverpages.

Hinsichtlich des Implementierungs- und Funktionalitätsstandards wird das Verfahren als eine so genannte Rich Internet Applikation betrieben. Dabei übernehmen die Endgeräte 2 einen Teil der zum Ausführen des Verfahrens notwendigen Routinen und Skripte. Diese umfassen insbesondere Java Skripte, Java Plugins, Flashplayer-Animationen, ActiveX-Plugins und dergleichen Erweiterungen mehr.

Die clientseitigen Rich Internet Applikationen werden von einem oder mehreren Applikationsservern, insbesondere von einem Java Enterprise System, verwaltet.

Die auf dem Server bzw. den Endgeräten bzw. im P2P-Netz ablaufenden Funktionen und Programme können hinsichtlich ihres Abstraktionsgrades für die jeweiligen Nutzer und Teilnehmer in verschiedene Schichten eingeteilt werden. Eine unterste Schicht wird durch Programmmittel 4 zum Ausführen grundlegender Datenbankoperationen gebildet. Diese enthält Komponenten zum Speichern bzw. Verwalten von Benutzerdaten oder multimedialer Benutzerinhalte.

Eine darauf aufbauende Verbindungsschicht 5 enthält Mittel zum Ausführen von Kommunikationsvorgängen zwischen dem Server 3 und den Endgeräten 2 bzw. zwischen den Endgeräten im Falle des P2P-Netzes. Dies umfasst beispielsweise das logische Auf- und Abbauen einer Verbindung zwischen zwei oder mehreren ausgewählten Endgeräten, eine logische Zuordnung zwischen Endgerät und IP-Adresse einerseits und Teilnehmernamen andererseits und andere Mittel zum Zugriff höherer Abstraktionsebenen auf den Datenfluss zwischen den Endgeräten.

Eine Teilnehmerschicht 6 stellt eine grundlegende und minimale Benutzeroberfläche für die die Endgeräte bedienenden Teilnehmer bereit. Diese umfasst insbesondere das Bereitstellen von Mitteln zum Einrichten eines Teilnehmerprofils, zum Editieren eines Teilnehmerprofils, zum Up- oder Download von Inhalten bzw. zum Betreiben von Webcamanwendungen. Die Teilnehmerschicht stellt insbesondere auch grundlegende Mittel zum Anzeigen von Webseiten mit minimalen Funktionalitäten bereit.

Schließlich ist eine Frontendschicht 7 vorgesehen. Diese umfasst Mittel, die eine intuitive und komfortable Benutzerführung ermöglichen und insbesondere eine graphische Benutzeroberfläche (GUI) erzeugen. Sie ermöglicht es insbesondere, andere Teilnehmerprofile per drag-and-drop-Features zu ordnen, anzuwählen, zu gruppieren oder mit anderweitigen Attributen zu belegen, wie im Folgenden anhand von Beispielen gezeigt wird.

Fig. 1a zeigt eine beispielhafte gerätemäßige Konfiguration des Servers 3. Dieser ist bei dem hier vorliegenden Beispiel als eine verteilte Serverarchitektur angelegt. Diese besteht aus einem Applikation Server 3a sowie einem Web Server 3e mit einem gemeinsamen Zugriff auf eine Teilnehmerdatenbank 3b. Diese beinhalten Mittel zur Verwaltung der Teilnehmerprofile. Softwareseitig sind hierfür anwendungsspezifische Programme zum Ausführen des hier beschriebenen Verfahrens vorgesehen, die auf den bekannten Datenbank- und Programmstrukturen, wie beispielsweise MySQL, einen Java Enterprise Server, einem Apache Tomcat und einem für derartige Server geeigneten Betriebssystem, wie insbesondere Linux aufbauen.

Die Kommunikationsoperationen werden durch einen oder mehrere Streaming-Server 3c und Applikationsserver 3a ausgeführt. Diese enthalten die für derartige Aufgaben notwendigen Programmmittel, insbesondere Red5, Wowza Media Server oder Flash Media sowie einen Java Enterprise Server (JBoss, GlassFish) in Verbindung mit einem dafür vorteilhaften Betriebssystem, wie beispielsweise Linux in Form einer Red Hat Distribution.

Ein Lastausgleichsserver 3d vermittelt die Kommunikation zwischen den Servern 3a und 3c und den Clients, d.h. den Endgeräten 2 und dient gleichzeitig zum Ausgleichen der Netzlast. Der Lastausgleichssever verwendet zweckmäßigerweise als Programmmittel Linux Virtual Server LVS und baut auf dem Betriebssystem Linux auf. Die Kommunikation zwischen den Clients, d.h. den Endgeräten 2, erfolgt in Verbindung mit den Applikation Servern 3a und dem Lastausgleichsserver 3d über das TCP/IP-Protokoll zweckmäßigerweise in Verbindung mit XML. Die Kommunikation zwischen den Endgeräten und den Streaming Servern greift auf Protokolle wie RTMP und RTMFP unter Verwendung des Flash Video-Formats zurück.

Die Clients weisen die entsprechenden Programmmittel zum Darstellen, Senden und Empfangen multimedialer Daten auf. Dies sind insbesondere Shockwave Flash-Dateien, Flash-Player oder vergleichbare Applikationen, ein Web-Browser und ein Betriebssystem, beispielsweise Linux, MacOS oder ein Betriebssystem aus der MS-Windows-Familie.

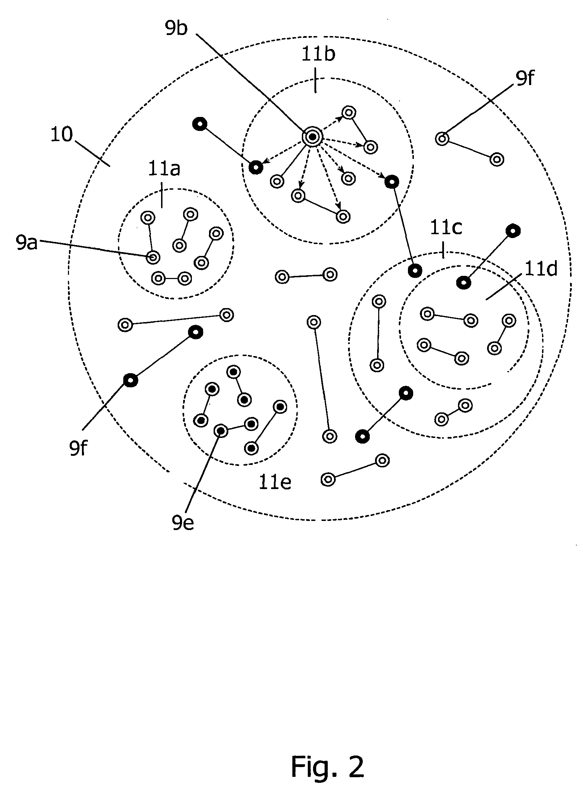

Alle Teilnehmer des Verfahrens bilden eine als Teilnehmerpool bezeichnete Gesamtmenge, die durch eine Reihe von Teilmengen unterteilt sein kann. Fig. 2 zeigt eine schematische Darstellung dieser als "Pootprinzip" bezeichneten Struktur.

Alle Teilnehmer am laufenden Verfahren, sowie alle nachfolgend näher erläuterten Teilmengen und permanent bestehenden Übertragungskanäle bilden den Gasamtpool aller Teilnehmer, der als Mainpool 10 bezeichnet wird.

Alle in Fig. 2 durch verschieden ausgebildete Kreise gekennzeichneten Teilnehmer klassifizieren sich durch ihre Eintragungen in ihrem Teilnehmerprofil, ihr Teilnehmerverhalten und ihre willkürlich festgelegten Kontakte zu anderen Teilnehmern. Diese Klassifizierungen ergeben eine Reihe von Subpools, die als Teilmengen des Mainpools ausgebildet sind.

In einem Subpool sind Teilnehmer logisch nach bestimmten Kriterien zusammengefasst. Ein erster Subpool 11a ist beispielsweise durch Teilnehmer 9a gebildet, die im Rahmen eines single-connects miteinander verbunden sind. Ein zweiter Subpool 11b für einen Multi Connect wird durch einen "Place" gebildet. Dabei befindet sich ein als "Actor" bezeichneter Teilnehmer 9b einem one-to-many-Connect-Modus mit anderen Teilnehmern.

Mehrere Subpools können auch ineinander verschachtelt sein. So wird beispielsweise ein äußerer Subpool 11c durch eine Teilmenge von ersten Teilnehmern gebildet, von der sich eine weitere Teilmenge von weiteren Teilnehmern unterscheidet, die einen inneren Subpool 11d bilden.

In Fig. 2 ist ein weiterer isolierter Subpool 11e dargestellt, der Teilnehmer 9e umfasst, die auf einer Blackliste unerwünschter Teilnehmer aufgeführt sind und permanent oder vorübergehend von den anderen Teilnehmern des Mainpools isoliert sind. Des weiteren können auch ungebundene Teilnehmer 9f in dem Mainpool vorhanden sein, die entweder keinem der erwähnten Subpools zuzuordnen sind oder zu anderen Teilnehmern anderer Subpools einen Kontakt eingerichtet haben.

Sobald ein Teilnehmer ein Teil eines Subpools ist, befindet er sich automatisch in einer Gruppe möglicher Verbindungen zu anderen Teilnehmern, auf die er im Falle einer entsprechenden Anfrage direkt zugreifen kann. Die Art dieses Zugriffs erfolgt beispielsweise durch einen als "Zappen" bezeichneten Anwahlvorgang eines anderen Teilnehmers.

Für diesen Zapp-Vorgang können Präferenzen vergeben werden. Diese Präferenzen werden in den Teilnehmerprofilen jedes einzelnen Teilnehmers festgelegt. Diese liegen dort als so genannte Like- und Dislike-Tags vor und kennzeichnen logisch eine Teilmenge des Mainpools, d.h. einen Subpool. Die Verbindungsaufnahme zwischen einem Teilnehmer und einem zweiten Teilnehmer erfolgt beim Zapp-Vorgang so, dass die erste freie Verbindung des am ehesten in Frage kommenden Subpools mit dem anfragenden Teilnehmer aktiviert wird.

Die Like- und Dislike-Tags werden in der Regel nicht ständig verändert. Durch eine Pre-Indizierung aller möglichen Partner werden Latenzen minimiert. Die Abstimmung der Teilnehmerprofile aufeinander, insbesondere der Vergleich der Like/ Dislike-Tags für den Zapp-Vorgang wird durch Matching-Module ausgeführt, die einen Bestandteil der Vermittlungsschicht 5 in der Darstellung aus Fig. 1 bilden.

Die Aufgabe des Matching-Modules ist die Bewertung der gesammelten Teilnehmer-Informationen (Profile, Teilnehmer-Verhalten, Voting), Katalogisierung der Teilnehmer/Channels in entsprechende Subpools, sowie die Vermittlung anfragender Teilnehmer mit Partnern aus dem jeweils passenden Subpool. Hierfür kommen insbesondere Information Retrieval Techniken zum Einsatz. Das Modul ist zweckmäßigerweise lernfähig ausgeführt und kann die gespeicherten Teilnehmerprofile an individuelle Veränderungen einzelner Teilnehmer, insbesondere an deren Verhalten innerhalb des Mainpools bzw. an deren bislang erfolgte Kommunikationsabläufe und -vorgänge anpassen.

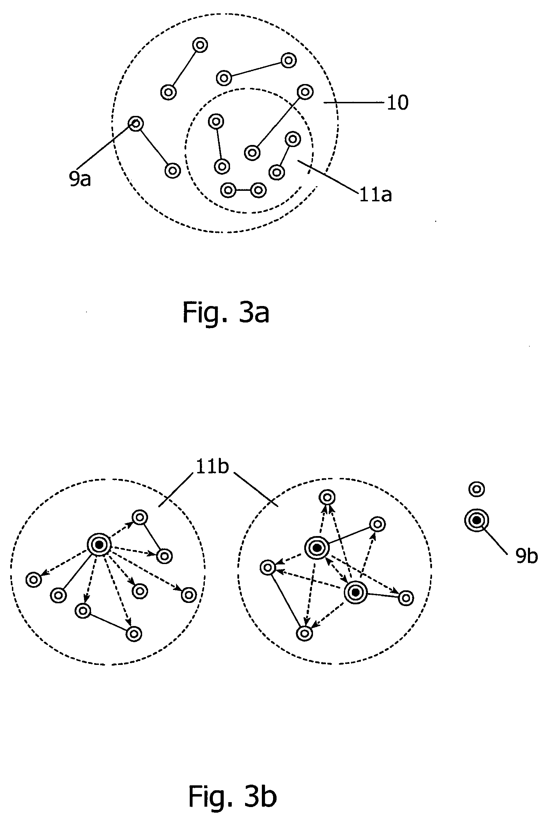

Nachfolgend werden einige grundlegende Kommunikationsmodi näher erläutert. Fig. 3a zeigt hierzu einen beispielhaften Single-Connect im Teilnehmerpool, bei dem eine one-to-one-Kommunikation beispielhaft realisiert ist. Die Kommunikation zwischen den Teilnehmern wird in diesem Beispiel als so genannter "Media Stream Connect" in Form von Audio, Video und Text zwischen zwei Teilnehmern mittels einer Webcam und Mikrofon oder vergleichbare Audio/Videoquellen ausgeführt. Dabei kommunizieren zwei Teilnehmer direkt über eine Video-/Audioverbindung und/oder Textchat-Verbindung miteinander. Die Verbindung kann jederzeit unterbrochen bzw. gewechselt werden.

Die Vermittlung im Single-Connect-Modus ist durch die Teilnehmer frei wählbar. Eine erste Möglichkeit bildet eine zufällige Verbindung ohne Präferenzen. Der Tei Inehmer wird mit einem zufälligen Partner aus dem Mainpool verbunden. Die Verbindung erfolgt ohne Präferenzen, da der Teilnehmer entweder keine Like-, Dislike-, WhoAmI-Tags in seinem Profil eingetragen oder diese deaktiviert hat.

Bei einer zufälligen Verbindung mit Präferenzen wird ein erster Teilnehmer bevorzugt mit einem zufälligen Teilnehmer verbunden, der sich innerhalb einer präferierten Gruppe, d.h. einem Subpool, befindet, die sich durch eine oder mehrere der folgenden Eigenschaften auszeichnet.

Bei einer ersten Eigenschaft wird eine Trefferquote innerhalb eines präferierten Subpools zwischen den Like-Tags eines ersten Teilnehmers und dazu passenden Selbstbeschreibung und/oder persönlichen Daten eines zweiten Teilnehmers ermittelt. Alternativ kann auch die die Übereinstimmung zwischen gleichen Like-oder Dislike-Tags bestimmt werden. Eine weitere Möglichkeit einer Präferenzensetzung besteht in einem Ranking der Ähnlichkeit des Nutzungsverhaltens beider Teilnehmer bei ähnlichen Nutzungs-Gewohnheiten in der Verwendung der Zufallsauswahl. Vom Teilnehmer eingegebene Dislike-Tags können eine Verbindung zu Teilnehmern mit dazu in Beziehung stehenden Like- und/oder Beschreibungstags ausschließen.

Es besteht auch die Möglichkeit, eine Reihe von Teilnehmern in dem eigenen Teilnehmerprofil in einem so genannten Friends-Panel vorzumerken und durch ein Anklicken ihres Icons im Friends-Panel direkt zu kontaktieren. Ist der erwünschte Partner gerade besetzt, kann der anfragende Teilnehmer in einer Warteschleife geparkt werden. Die Anfrage wird dem Partner durch eine Anklopfroutine angezeigt, die zum Beispiel durch ein blinkendes Icon oder ähnliches symbolisiert wird. Sobald diese bestätigt ist, wird die Verbindung aufgebaut.

Fig. 3b symbolisiert zwei verschiedene Arten eines Multi-Connect-Modus, bei dem eine Kommunikation nach dem one-to-many bzw. dem many-to-one-Typ realisiert ist. Bei diesem Modus wird eine Verbindung zwischen einem oder mehreren als "Actors" bezeichneten Teilnehmern und mehreren Teilnehmern, die als "Viewers" bezeichnet werden, hergestellt. Die einen oder mehreren Actors streamen dabei ihren Mediastream (mittels Webcam/Mikrofon oder vergleichbare Audio/Videoquellen) zu einer unbegrenzten Anzahl Viewer. Das linke Bild in Fig. 3b entspricht dabei im wesentlichen dem Subpool 11b in Fig. 2. Bei diesem Multi-Connect-Modus ist der Actor 9b mit mehreren Teilnehmern 9 verbunden und versorgt diese jeweils mit einem Multimedia-Stream. Bei der rechten Darstellung in Fig. 3b sind zwei Actors 9b vorhanden, die die Teilnehmer 9 gemeinsam mit je einem Stream versorgen.

Als Multiconnect-Komponenten sind dabei wie erwähnt Actors und Viewers als spezielle Teilnehmerkategorien vorgesehen. Ein Actor ist dabei ein Teilnehmer, der seinen Mediastream für ein breites Publikum, d.h. mehreren Teilnehmern simultan oder parallel zugänglich macht. Ein Viewer ist der Teilnehmer, der den Mediastream des Actors aktiv und passiv empfängt. Ein Actor kann gleichzeitig Viewer eines anderen Actors sein.

Der Actor nutzt hierzu einen Place. Ein Place im Sinne des hier erläuterten Verfahrens ist ein Sendeplatz innerhalb des Teilnehmerpools, der gegebenenfalls kostenpflichtig sein kann. Ein Actor kann seinen Place grundsätzlich frei über einen Link-Tag benennen. Der Place ist danach unter diesem Link-Tag generell verfügbar, unabhängig ob er gerade mit einer oder mehreren Streams bespielt wird. Streams können durch den Actor im Place durch eine Rundnachricht in Form eines virtuellen Flyers angekündigt werden. Die Rundnachricht enthält dabei Parameter wie zum Beispiel einen Namen des Actors, eine Onlinezeit vor Beginn des Streams, und einen frei gestalteten Wartebildschirm.

Eröffnet ein Actor einen Place, kann er für diese einen Namen (Link-Tag) festlegen. Unter diesem Link-Tag ist sein öffentlicher Mediastream im Kommunikationsnetz direkt erreichbar. Zu jedem Place gehört mindestens ein Subpool, genannt Stage, in dem wie gezeigt auch mehrere Actors agieren können. Sie werden durch ihre Icons grafisch im Stage-Panel repräsentiert. Alle im "Stage"-Su bpool befindlichen Actors sind für alle Viewer des Place sichtbar. Der "Stage"-Su bpool bildet gewissermaßen eine virtuelle Bühne.
Mehrere Actors, können auf einem Place einzeln oder als Composite-Splitscreen an mehrere Viewer streamen. Die teilnehmenden Actors eines Places sind in einem Stage-Panel durch ihr Icon grafisch repräsentiert und können vom Viewer direkt angewählt oder kontaktiert werden, sofern dies zugelassen ist und der Actor nicht besetzt ist. Dabei wird von einer Splitscreen-Darstellung in eine Fullscreen-Darstellung gewechselt und ein Pseudo-One-to-one-Connect etabliert. Als Parameter für den Subpool werden eine maximale Anzahl an Actors entweder von den Actors selbst oder von einem Systemadministrator festgelegt. Des weiteren wird bestimmt, ob Viewer dem Subpool beitreten und somit die Stage betreten dürfen.

Wenn das Setup eines Places fertig gestellt ist, erscheint ein Start- bzw. Wartebildschirm als virtueller Vorhang oder Curtain, der mittels einer Texteingabe, einem Startbild, einem Flyer oder einem sonstigen Gestaltungsmittel frei gestaltet werden kann. Per Mausklick kann durch den Actor der Place geöffnet und die Stream-Übertragung gestartet werden. Places verwenden Curtains als Platzhalter und Display für Ankündigungen, wenn sie gerade keine Streams senden.

Der aus dem mindestens einen Viewer bestehende, 2. Subpool eines Places wird als Audience bezeichnet. Er umfasst die Menge aller Teilnehmer, die an einem Multiconnect als Viewer teilnehmen.

Actors und Viewer sehen Teilnehmer, die Teil des Audience-Pools sind, in einer Audience-Panel des Places grafisch durch deren Icon repräsentiert. Unbekannte Teilnehmer werden durch einen Platzhalter angezeigt, der zudem deren Anzahl indiziert. Audio-Signale aller Viewer sind als Mixdown öffentlich hörbar, sofern der Actor dies zulässt.

Die Viewer können in verschiedene Zuschauer-Arten unterschieden werden. Ein aktiver Viewer kann vom Actor auf die Stage geholt werden oder diese selbst betreten. Sein Icon wird von der Audience-Panel in die Stage-Panel gezogen. In diesem Fall wird er auch zum Actor, Teil des Places und kann öffentlich gesehen und gehört werden.

Ein passiver Viewer kann das Geschehen auf dem Place des Actors empfangen, sendet jedoch nicht selbst. Er kann nicht mit dem Actor kommunizieren.

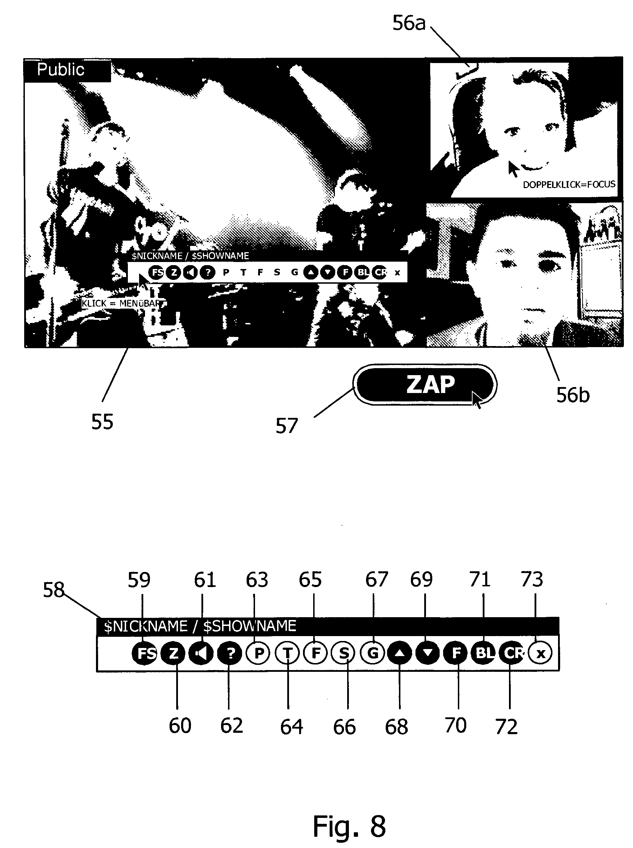

Eine Kommunikation mit/innerhalb der Audience ist ebenfalls möglich. Teilnehmer, die wie oben beschrieben als Friends gesetzt worden sind, können durch anklicken ihres Icons direkt kontaktiert werden, unbekannte Viewer durch Betätigung eines Zap-Buttons, wenn sich der Focus auf dem Partner Screen (56a, Fig.8) befindet, sowie durch die Betätigung eines Platzhalterbuttons oder eine ähnliche Steuerung auf Seiten des Teilnehmers oder des Servers.

Die Kontaktmöglichkeiten innerhalb der Audience entsprechen dabei im wesentlichen denen des bereits beschriebenen Single-Connects. Es sind zufällige Verbindung ohne Präferenzen, zufällige Verbindungen nach Präferenzen und Verbindungen zu bekannten Nutzern, den so genannten Friends, möglich. Viewer können darüber hinaus mit dem Actor wie im Single-Connect kommunizieren, ohne selbst öffentlich sichtbar zu sein.

Der Actor kann den Zugang zum "Audience"-Pool über Passwort, elektronische "Tickets" und ähnliche Verfahren beschränken. Weiter kann er eine Reihe von (Zugangs-)Parametern, wie beispielsweise eine maximale Anzahl Viewer, nur Friends als Viewer oder nur Viewer mit bestimmten Tags, selbsttätig einstellen.

Innerhalb des Places kann jeder Viewer den aktuellen Actor mittels eines Voting-Buttons bewerten. Im einfachsten Fall sind als Voting-Buttons eine Wahl zwischen "gut" oder "schlecht", d.h. "Daumen hoch/Daumen runter" vorgesehen. Der Durchschnitt der Positiv-/Negativ-Votings aller zusammengehörigen Actors ergibt die Gesamtbewertung eines Place.

Die Voting-Ergebnisse haben Einfluss auf die Parameter anderer Features, wie insbesondere "Best Of"-Listen oder ein Ranking innerhalb präferierter Subpools.

Zum Aktivieren des Place-Modus drückt der Teilnehmer einen "Public"-Button und wechselt dadurch in den Multi-Connect-Modus. Dadurch werden ein Stage- und Audience-Panel geöffnet. Der nun als Actor agierende Teilnehmer konfiguriert Stage- und Audience-Parameter. Der Place kann nun für die Audience geöffnet werden und ist startbereit. Der Actor klickt auf einen Curtain-Button, um den Place zu starten und für andere Teilnehmer zu öffnen.

Nachfolgend sollen einige Mittel zur Indizierung und Adressierung näher beschrieben werden, die in die Teilnehmerprofile eingefügt werden können. Sie bilden einen Bestandteil der in Fig. 1 gezeigten Teilnehmerschicht 6 bzw. der Frontendschicht 7.

Einen ersten Teil des Teilnehmerprofils bilden so genannte Tags. Dies sind Stichwörter, die helfen, den Nutzer und seine Interessen zu beschreiben. Sie werden genutzt, um eine möglichst hilfreiche Vermittlung zwischen Teilnehmern mit gleichen Interessen zu gewährleisten. Dislike-Tags sind frei definierbare Stichwörter zur Beschreibung von Antipathien ("Ich mag nicht...") eines Teilnehmers. Like-Tags sind frei definierbare Stichwörter zur Beschreibung von Sympathien ("Ich mag...") des Teilnehmers. WhoAmI-Tags umfassen Selbstbeschreibungs-Stichwörter ("Ich bin...") des Teilnehmers. Die Teilnehmer geben Tags über ihre Person in ihrem Profile ein.

Die eigentliche Selbstdarstellungs- und Informationsplattform sowie der Einstellungsbereich für Verbindungspräferenzen wird durch das Teilnehmerprofil gebildet, das der Teilnehmer im wesentlichen selbständig verwaltet. Es bietet insbesondere eine Sammelstelle für Tags. Das Teilnehmerprofil bietet den Teilnehmern die Möglichkeit, Informationen über sich für andere Nutzer zur Verfügung zu stellen, Verbindungspräferenzen einzugeben und sich selbst darzustellen. Die im Profil eingegebenen Informationen stehen dem System als Tags zur Indizierung des betreffenden Teilnehmers zur Verfügung.

Inhaltlich gliedern sich die Teilnehmerprofile im wesentlichen in zwei Bereiche. Ein erster Bereich dient der Information über bzw. der Selbstdarstellung des Teilnehmers. Er enthält einen Namen, der auch ein Nickname sein kann, ein Geburtsdatum, das Geschlecht, Angaben über die Herkunft, insbesondere das Land/Provinz/Ort des Teilnehmers bzw. Angaben zu Sprache des Teilnehmers. Diese können insbesondere als Multiple-Choice-Optionen gewählt werden. Weiterhin sind WhoAmI-Tags, Like-Tags und Dislike-Tags mit kategorisierten und frei definierbaren Selbstbeschreibungs-Stichwörtern vorgesehen. Mittels der "Who am I"-Tags ("Ich bin...") kann sich der User in freien Stichwörtern selbst beschreiben. Like Tags können beispielsweise die Lieblingsmusik, das Leibgericht und dergleichen Angaben des Teilnehmers betreffen, Dislike-Tags entsprechende Angaben über Antipathien.

Einen möglichen Bestandteil des Teilnehmerprofils bilden auch Jingles. Der Teilnehmer kann hierzu kurze Soundfiles uploaden. Diese werden bei jeder neuen Verbindung zum jeweiligen Partner gestreamt, sofern dieser "Jingle empfangen" aktiviert hat. Möglich sind auch Slogans, bei denen Teilnehmer Kommentare jeglicher Art (Tagesform, Kennenlern-Sprüche, Mottos, usw.) definieren können. Diese werden bei jeder neuen Verbindung beim Gesprächspartner angezeigt. Möglich sind auch so genannte Mashups, bei denen der Teilnehmer Widgets/Dienste externer Anbieter in ihr Profile einbauen können, wie z.B. eigene Audio-Playlisten von Radioblogclub, LastFM und dergleichen weiterer Dienste.

Darüber hinaus können Places bzw. Teilnehmer entweder über direkte Links auf einer Webseite des Verfahrens oder durch verlinkte Widgets kontaktiert werden. Die Widgets sind kleine Applikationen, die in andere Internetplattformen und Portale integriert werden können. Sie ermöglichen es damit, bestimmte Teilnehmerprofile direkt zu erreichen, oder sich "live" in den Ablauf des Verfahrens aus anderen Portalen einzuschalten. Das Verfahren wird damit virtuell auf andere Internetdienste und Portale, beispielsweise MySpace oder Facebook ausgedehnt und mit diesen verlinkt.

Der Teilnehmer kann Präferenzen in Form der Like-Tags (Ich mag...) in Form von frei definierbaren Stichwörtern zur Beschreibung von Sympathien bzw. Dislike-Tags ("Ich mag nicht...") in Form von frei definierbaren Stichwörtern zur Beschreibung von Antipathien angeben.

Außerdem können Link-Tags einen Bestandteil des Teilnehmerprofils bilden. Link-Tags sind Verknüpfungen, die eindeutig bestimmten Places oder Teilnehmern zugeordnet sind. Link-Tags müssen eindeutig sein und können nur einmal vergeben werden. Dopplungen sind nicht möglich. In Kombination mit URLs funktionieren sie wie gebräuchliche Hyperlinks. So sind Inhalte direkt von außerhalb der Anwendung zu erreichen. Link-Tags können in das Link-Tag Feld (ähnlich der Adresszeile eines Browsers) eingegeben werden, oder durch entsprechende Icons grafisch repräsentiert sein. Werden Link-Tags im Textchat verwendet, können sie durch Anklicken direkt aktiviert werden.

Einen besonders wichtigen Bestandteil des Teilnehmerprofils bieten Features zum Betreiben bzw. Knüpfen eines sozialen Netzwerkes. Ein erstes Feature bietet eine so genannte "Friends"-Funktion.

Durch Nutzen der Friends-Funktion haben Teilnehmer die Möglichkeit, verbundenen Gesprächspartnern "Freundschaft" anzubieten, und bei Bestätigung, diese als Friends direkt zu speichern. Friends jedes Teilnehmers werden zweckmäßigerweise auf dem Server oder in einem Peer to Peer Netzwerk persistent gespeichert und durch Thumbnails, generiert aus dem Videostream des "Friend" oder ein Upload eines Digitalfotos, in einem "Friends-Panel" des Teilnehmers repräsentiert. Ist ein Friend gerade online, wird dies durch eine Statusveränderung seines Icons (z.B. durch ein zusätzliches Symbol oder eine Farbänderung) angezeigt.

Friends können durch Anklicken ihres Icons im Friends-Panel direkt kontaktiert werden. Ist der erwünschte Partner gerade besetzt, befindet sich der anfragende Teilnehmer in einer Warteschleife. Die Anfrage wird dem Partner durch "anklopfen" (blinkendes Icon, o.ä.) kommuniziert. Sobald dieser bestätigt, wird die Verbindung aufgebaut.

Die Teilnehmer können ihre jeweiligen Friends zu Places einladen, indem sie beispielsweise ihr Icon in ein Audience-Panel eines Places ziehen, in der sie sich gerade selbst befinden. In diesem Fall erhält der entsprechende Friend eine Anfrage des Absenders, ob er an der Veranstaltung teilnehmen will. Bestätigt er diese, wird er direkt zum Place weitergeleitet und kann mit diesem innerhalb der Audience Kontakt aufnehmen. Diese Drag-and-Drop-Funktion bildet einen Bestandteil der Frontend-Schicht 7 im in Fig. 1 gezeigten Schichtenmodell.

Darüber hinaus können die Teilnehmer während einer Verbindung untereinander verschiedene Objekte, beispielsweise Bilder, Klänge, Texte usw. in Dateiform austauschen, indem repräsentative Icons dieser Objekte per Drag and Drop in den Screen des Partners gezogen werden. Die Icons werden in einem Suitcase-Panel des Teilnehmerprofils angezeigt.

Der Datenaustausch zwischen den Teilnehmern erfolgt dabei über so genannte PZ-Objects. Dies sind Container zum Austausch von Daten innerhalb des Verfahrens. Diese Container können Dateien, Widgets sowie Plugins enthalten. Die PZ-Objects enthalten neben dem eigentlichen Datei-Inhalt Metadaten, die bestimmte Rechte und Anwendungsmöglichkeiten beinhalten. Diese regeln die gewünschten Anwendungsmöglichkeiten und schränken diese bei Bedarf ein. In einem PZ-Object enthaltene Metadaten können nur von dem Autor, dem Teilnehmer, der es erstellt hat, verändert werden.

Beispiele für auf das PZ-Object bezogene Rechte und Einstellungen sind beispielsweise Weitergaberechte oder Kopierrechte für die Teilnehmer, die vom Objektersteller gesetzt werden können. Beispielsweise kann ein Teilnehmer festlegen, dass das PZ-Object nur einmal weitergegeben werden darf, wobei der weitergebende Teilnehmer keine Kopie davon behält. Es kann auch festgelegt sein, dass der Empfänger das PZ-Object nicht mehr an weitere Personen weiterreichen darf bzw. kann.

Weiterhin können andere vielfältige Einstellungen für das PZ-Object festgelegt sein. So kann das Objekt nur einmal vorhanden sein, während der weitergebende Teilnehmer keine Kopie behält und der Empfänger das Object an andere weiterreichen darf. Es kann festgelegt werden, dass das PZ-Object nur n-mal weitergegeben werden kann, bzw. sich nach einer bestimmten Zeit t oder nach einma ligem Ausführen selbst löscht. Darüber hinaus ist auch eine Passwortvergabe für das PZ-Object möglich. Es ist kann auch festgelegt sein, dass das Objekt nur im Austausch gegen ein anderes weitergegeben werden kann.

Zur Erweiterung der Funktionalitäten der Teilnehmerprofile können auch Widgets vorgesehen sein. Dies sind kleine Internet-Applikationen, die u.a. zum Einbinden bzw. Ansteuern von Funktionalitäten diverser Internetdienste wie MySpace, GoogleEarth, Flickr dienen können. PZ-Plugins erweitern die Funktionalität können von den Teilnehmern selbst erstellt werden. Hierzu bieten sich die dafür geeigneten Softwaremittel wie Actionscript oder Java an. Sie bieten zusätzliche Funktionen wie Games, Musik-Player usw.

In dem bereits erwähnten Suitcase-Panel können Teilnehmer ihre PZ-Objects sammeln und organisieren sowie eigene PZ-Objects erstellen und/oder deren Rechte und Funktionalitäten festlegen oder ändern.

Die Teilnehmer können Musik, die lokal auf ihrem Computer läuft, für alle verbundenen Clients hörbar machen. Die Quelle ist hierfür unerheblich, solange die Musik über die lokale Soundkarte läuft. Das digitale Audiosignal wird hierfür abgegriffen und an den/die verbundenen Client(s) gestreamt. Durch einen Regler kann der Pegel des Mikrofons und der externen Audioquelle eingestellt werden.

Teilnehmer im direkten Connect (Single-/Multiconnect) haben verschiedene Online-Spiele zur Auswahl. Der Mediastream jedes Teilnehmers ist jeweils in das Spiel mit einbezogen.

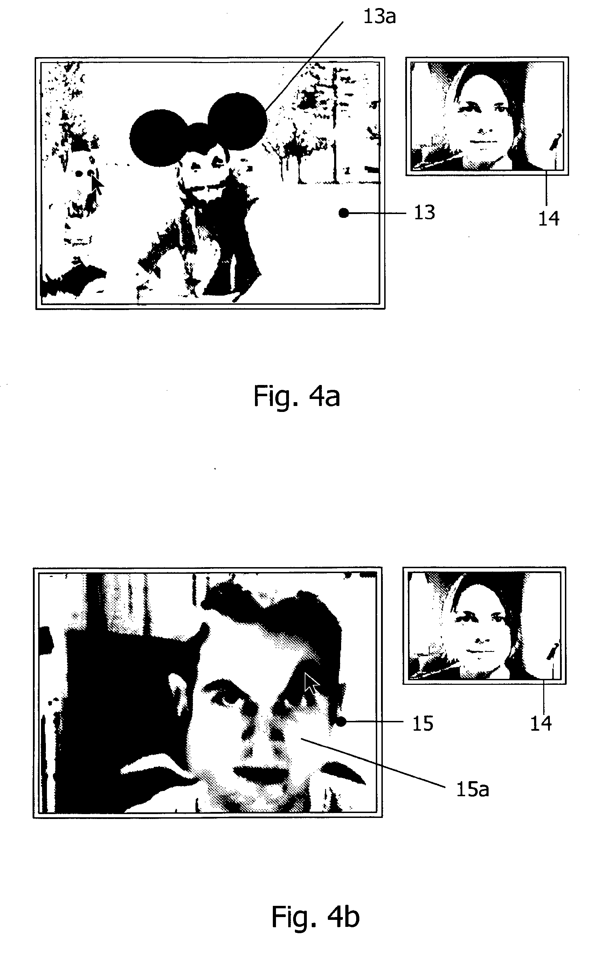

Die Figuren 4a und 4b zeigen diesbezügliche Beispiele. Fig. 4a zeigt einen Teilnehmer in einem in einem Fenster 13 angezeigten Mediastream, der gerade mit einem anderen Teilnehmer verbunden ist, der in einem Fenster 14 angezeigt wird. Der in dem Fenster 14 angezeigte Teilnehmer hat nun die Möglichkeit, in dem Fenster 13 Verzierungen 13a einzuzeichnen und somit den dort angezeigten Mediastream durch einen Paint-Vorgang zu modifizieren.

In Fig. 4b wird das in dem Fenster 15 angezeigte Gesicht des Teilnehmers verzerrt und somit zum Objekt eines Morph-Programms mit den dabei möglichen Verzerrungen 15a gemacht.

Sind mindestens zwei Teilnehmer in einem Single-Connect miteinander verbunden, kann eine so genannte Join Me-Funktion aktiviert werden. Damit nimmt einer der Teilnehmer einen anderen virtuell "bei der Hand". Beide Teilnehmer vollziehen dabei die selbe virtuelle Bewegung innerhalb des Netzwerkes.

Die Join Me-Funktion kann beispielsweise durch das Anklicken eines Join-Me-Buttons durch beide Teilnehmer ausgelöst werden. Sobald einer der Teilnehmer eine Aktion, beispielsweise einen Zapp-Vorgang, ausführt, vollzieht der andere Tei Inehmer diesen Vorgang automatisch mit. Der Wechsel eines Connects durch den einen Teilnehmer überträgt sich dabei automatisch auf den anderen Teilnehmer. Die Join-Me-Funktion bleibt so lange aktiv, bis der entsprechende Button ein zweites Mal angeklickt und die Funktion somit wieder gelöst wird. Zweckmäßigerweise sind Mittel zum Ausführen von Sicherheitsfunktionen vorgesehen. Ein erstes Mittel stellen Blacklisten dar. Diese bieten eine Sperrfunktion für unerwünsche Kommunikationsteilnehmer.

Die Blacklist-Funktion kann der Teilnehmer verwenden, wenn dieser einen beliebigen Teilnehmer aus verschiedenen Gründen ablehnt und mit diesem keine Kommunikation ausführen will. Durch drücken eines Blacklist-Knopfes im eigenen Teilnehmerprofil oder des entsprechenden Kommunikationspartners wird die gegenwärtige Verbindung beendet und der entsprechende Partner in einer persönlichen Liste unerwünschter Connects gespeichert. Eine derartige, durch den einzelnen Teilnehmer verwaltete Blackliste ist eine lokale Blackliste. Wenn ein Teilnehmer auf vielen derartigen lokalen Blacklisten erscheint, entsteht für den entsprechenden, auf den lokalen Blacklisten gespeicherten Teilnehmer ein bestimmtes Muster an derartigen Einträgen. Wird ein bestimmter Schwellenwert erreicht, wird der betreffende Teilnehmer auf eine globale Negativliste oder globale Blackliste gesetzt. Dies führt dazu, dass der betreffende Teilnehmer logisch dem in Fig. 2 bezeichneten Subpool 11e zugeordnet wird. Teilnehmer in diesem Subpool können nur noch untereinander innerhalb dieses Subpools kommunizieren. Damit wird verhindert, dass automatisierte Anwendungen wie so genannte Spam-Bots, d.h. automatische Spam-Clients, die Sperrung als solche identifizieren können.

Die Sperrung enthält zweckmäßigerweise Angaben und Daten zur Identität des verwendeten Internetzugangs und Computers des gesperrten Teilnehmers. Dies umfasst insbesondere ein Auslesen der IP-Adresse, eine Speicherung von Flash-Cookies und ähnliche Verfahren. Ziel ist es hierbei, Neuanmeldungen und somit Identitätswechsel blockierter Teilnehmer zu erschweren.

Ein weiteres Sicherheitsmerkmal bildet eine Meldefunktion bei minderjährigen Benutzern. Sobald ein Teilnehmer einen offensichtlich minderjährigen Benutzer oder das Teilnehmerprofil eines offensichtlich minderjährigen Benutzers entdeckt, kann er diesen mit Hilfe einer Child-Report Funktion, die beispielsweise durch das Anklicken eines Buttons ausgelöst wird, als minderjährig melden. Wenn ein so identifizierter Minderjähriger von mehreren Teilnehmern in dieser Weise markiert wird, ergibt sich ein eindeutiges Muster, welches das System veranlasst, den entsprechenden Client zu sperren.

Zusätzlich zu den vorhergehend beschriebenen Funktionen können weitere Funktionalitäten vorgesehen sein. Eine erste derartige Funktion betrifft eine Speicherfunktion für Streams, mit denen der Teilnehmer eine aktuell laufende Kommunikation mitschneiden und abspeichern kann. Der aktuelle Video-/Audiostream kann vom Teilnehmer lokal als Videodatei abgespeichert werden. Hierfür sind im wesentlichen zwei Möglichkeiten vorgesehen:
Bei einer Aufnahme eines Single-Connects können Teilnehmer eine laufende Kommunikation als Splitscreen mit beiden Teilnehmern als Videodatei lokal abspeichern und somit mitschneiden. Bedingung ist, dass jeder der Beteiligten die Aufnahme genehmigt und einen entsprechenden Button im Profil anklickt.

Bei der Aufnahme des Geschehens in einem Place im Multi-Connect-Modus können die Teilnehmer das Geschehen als Splitscreen- oder einzelne Actors als Fullscreen-Videodatei lokal abspeichern. Bedingung ist, dass der Actor/Place-Besitzer dies in den Voreinstellungen zulässt.

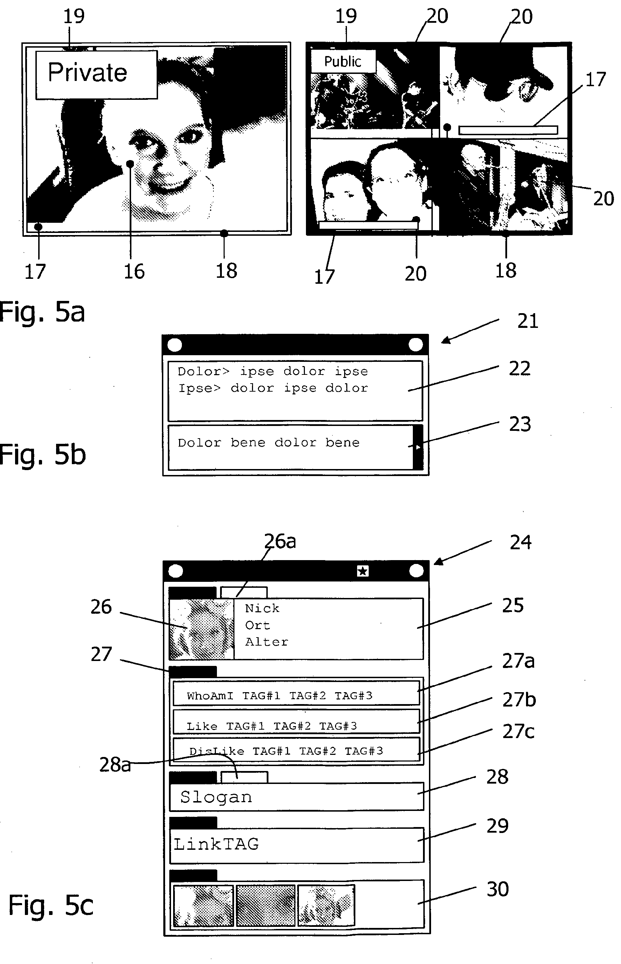

Nachfolgend sollen einige Elemente der graphischen Benutzeroberfläche für Teilnehmer beispielhaft erläutert werden. Fig. 5a zeigt dabei ein beispielhaftes Erscheinungsbild eines Video-Chats im Single-Connect-Modus links und als Splitscreen im Multi-Connect-Modus rechts.

Im Single-Connect-Modus wird dem Teilnehmer ein so genannter Partner-Screen 16 angezeigt, der das beispielsweise mit einer Webcam aufgenommene Bild seines Kommunikationspartners zeigt. Der Partner-Screen enthält ein Textfeld 17, das mit einem durch einen der beiden Teilnehmer editierbaren Slogan ausgefüllt werden kann. Im einfachsten Fall enthält das Textfeld den Namen des jeweiligen Kommunikationspartners. Über einen Zoom-Rahmen 18 kann der Partner-Screen beliebig vergrößert bzw. an eine beliebige Stelle des Bildschirms verschoben werden. Eine Nutzerstatusanzeige "Private"/"Public" 19 in der linken oberen Ecke des Partner-Screens signalisiert, dass die Verbindung aktiv ist und die Kommunikation ausgeführt wird.

In dem rechts in Fig. 5a dargestellten Splitscreen sind innerhalb des Zoom-Rahmens 18 mehrere Actor-Screens 20 enthalten. Diese können je nach Nutzerstatus jeweils das Textfeld 17 bzw. die "Private"/"Public"-Anzeige 19 enthalten. Der gesamte Splitscreen lässt sich über den Zoom-Rahmen skalieren. Einzelne Actor-Screens können, beispielsweise durch einen Doppelklick, aus dem Splitscreen herausgelöst und in einen Partner-Screen umgewandelt werden.

Fig. 5b zeigt ein beispielhaftes Textchat-Panel 21. Das Textchat-Panel kann sowohl als einzelnes Fenster an einer beliebigen Stelle des Bildschirms platziert oder in den Verband eines umfassenderen Fensters integriert werden. Das Textchat-Panel enthält ein Textdialog-Feld 22 zum Lesen der von dem jeweiligen Kommunikationspartner geschriebenen Nachrichten und ein Texteingabe-Feld 23 zum Eingeben eigener Nachrichten an den Kommunikationspartner.

Fig. 5c zeigt ein beispielhaftes Profil-Panel 24. Das Profil-Panel enthält ein Feld 25 mit grundlegenden persönlichen Daten, wie beispielsweise Name, Geburtsdatum, Alter, Wohnort usw. in Verbindung mit einem Profilbild 26. Über einen Reiter 26a kann ein weiteres Feld geöffnet werden, in dem aus Platzgründen weitere Daten des Teilnehmers angegeben sind. Das Profil-Panel enthält ein Tag-Feld 27. Dieses Tag-Feld enthält die vorhergehend beschriebenen Tags. Dies sind insbesondere die WhoAmI-Tags 27a, die Like-Tags 27b und die Dislike-Tags 27c. Ein Slogan-Feld 28 und ein über einen Reiter erreichbares Jingle-Feld 28a enthält den bereits erwähnten für den Teilnehmer kennzeichnenden Slogan bzw. das durch den Teilnehmer hochgeladene Jingle. Ein Link-Feld 29 enthält die durch den Teilnehmer gesetzten Link-Tags. Ein Image-Feld 30 öffnet eine Galerie mit hochgeladenen persönlichen Teilnehmerbildern.

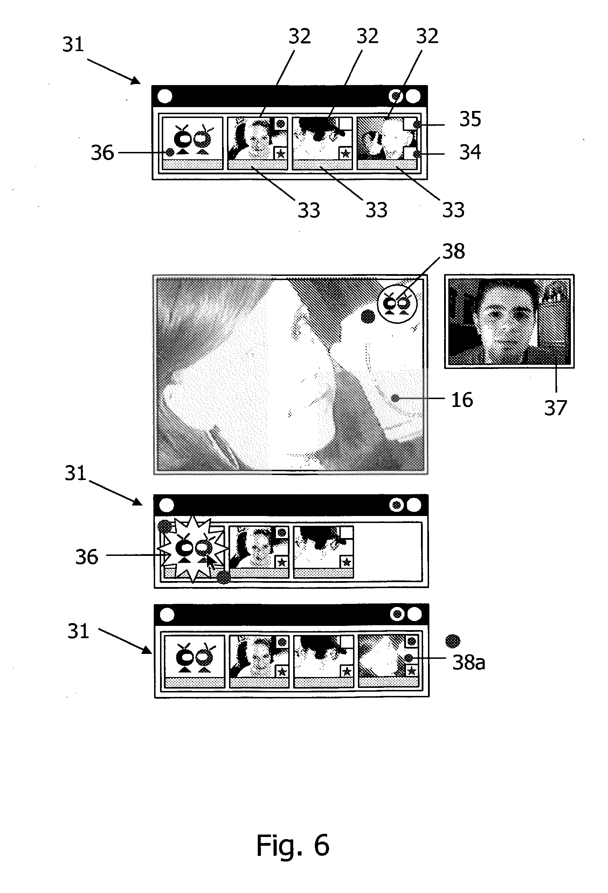

Fig. 6 zeigt ein beispielhaftes Friends-Panel 31 in Verbindung mit einem beispielhaften Ablauf der Etablierung eines Friend-Kontaktes. Das Friends-Panel 31 enthält eine Galerie 32 bereits als Friends eingetragener Teilnehmer, die dort mit ihren Profilbildern erscheinen. Diese enthalten Textfelder 33 mit deren Namen bzw. Nicknamen sowie Marker 34 zum Anzeigen eines offline/online-Status und Marker 35 zum Anzeigen eines Aktiv/Inaktiv-Status des jeweiligen Teilnehmers. Zusätzlich ist in dem Friends-Panel ein Knopf 36 zum Anbieten/Bestätigen eines Friends-Kontaktes vorgesehen. Dieser kann alternativ oder zusätzlich an anderer Stelle der Benutzeroberfläche integriert sein.

Das Etablieren eines Friends-Kontaktes erfolgt, indem ein initiierender Teilnehmer 37 während der Kommunikation mit einem zweiten Teilnehmer beispielsweise den Knopf 36 im Friends-Panel oder einen zusätzlichen/alternativen Button zum Freundschaft anbieten anklickt. Dabei erscheint in dem Partner-Screen 16 ein Dialog, der dem zweiten Teilnehmer Freundschaft anbietet. Bestätigt der zweite Teilnehmer die Anfrage, ist der Friends-Kontakt etabliert und beide Teilnehmer können einander fortan direkt kontaktieren. In dem Moment der Bestätigung des Friends-Kontaktes kann zusätzlich von jedem der Teilnehmer ein Schnappschuss des momentanen Webcam-Bildes erstellt werden. Diese Schnappschüsse werden zwischen den Teilnehmern ausgetauscht und können von diesen gegebenenfalls interaktiv bearbeitet, d.h. insbesondere kommentiert, werden. Die Schnappschüsse halten damit gewissermaßen den Moment fest, an dem der Friends-Kontakt geschlossen wurde.

Darüber hinaus besteht die Möglichkeit, dass ein Teilnehmer einen möglichen Nutzer über Email oder einen anderen Nachrichtendienst kontaktiert und ihn zur Nutzung des hier beschriebenen Verfahrens einlädt. Diese Funktion wird als Direct Link zur Einladung eines Freundes bezeichnet. Dies geschieht insbesondere dadurch, dass dem potentiellen Nutzer von dem Teilnehmer ein Hyperlink, eine URL oder dergleichen Webadresse übermittelt wird, von der aus ein Starten und Installieren der Verfahrenskomponenten auf dessen Endgerät möglich ist. Der ein ladende Teilnehmer erscheint dann als erster Friend des nun neu in das Verfahren aufgenommenen Nutzers. Er wird zu dessen erstem präferierten Kontakt.

Es besteht auch die Möglichkeit, Direct Links in Form von Bookmarks zu setzen. Diese erfüllen die gleiche Funktion wie andere Direct Links. Sie beziehen sich auf Single- und Multi-Connects und können vom Teilnehmer während einer aktiven Verbindung angelegt werden. Bookmarks zu Single-Connects bedürfen zweckmäßigerweise der Zustimmung des jeweiligen Partners, auf den der Link verweist. Sie können beispielsweise in Form der vorhergehend erwähnten PZ-Objects weiter gegeben, oder wie gebräuchliche Hyperlinks ausserhalb der People Zapping Applikation verwendet werden.

Des weiteren können kurze Textnachrichten und Notizen über eine Notify-Funktion an die gespeicherten Kontakte eines Teilnehmers hinterlassen werden. Die Nachricht ist vom empfangenden Teilnehmer abrufbar, indem dieser beispielsweise auf das Icon des Versenders klickt.

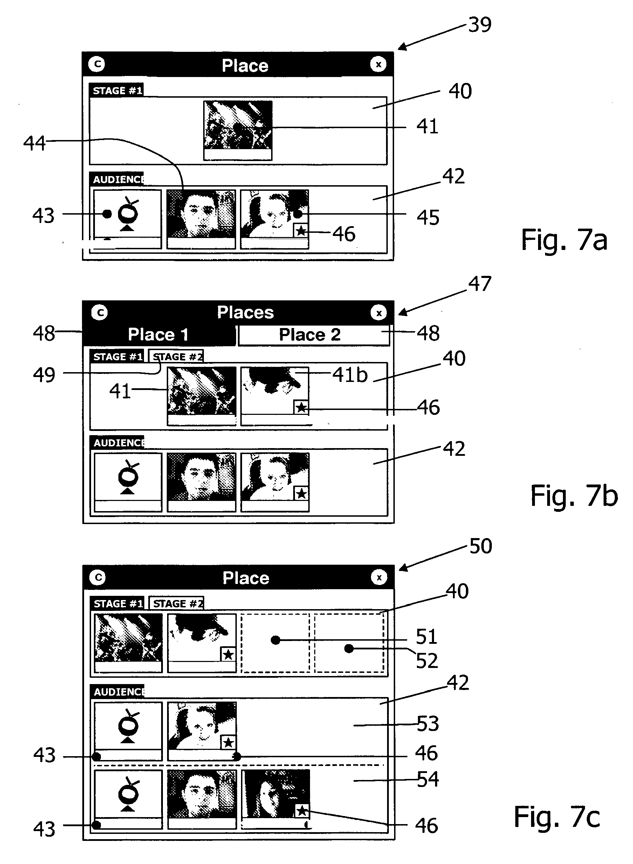

Die Figuren 7a, 7b und 7c zeigen beispielhafte Place-Panele. In Fig. 7a ist ein Place-Panel 39 in einer einfachsten Ausführung gezeigt. Das Place-Panel 39 enthält ein Stage-Feld 40. Das Stage-Feld enthält ein Profilbild 41 eines Teilnehmers, der als Actor im Sinne der vorhergehenden Beschreibung aktiv ist. Weiterhin ist ein Audience-Feld 42, in dem mehrere Teilnehmer symbolhaft mit deren Profilbildern angezeigt sind. Bei dem hier gezeigten Beispiel handelt es sich um einen zufälligen und anonymen Gastteilnehmer 43, einen eingetragenen Teilnehmer 44 und einen Friends-Teilnehmer 45 im Sinne der vorhergehenden Beschreibung. Dieser ist mit einem entsprechenden Friends-Icon 46 gekennzeichnet.

Fig. 7b zeigt ein Place-Panel 47 für einen Zugriff auf mehrere untergeordnete Places mit mehreren Stages. Der Zugriff auf mehrere untergeordnete Places wird dabei durch einen Place-Button 48 ermöglicht, die der Teilnehmer anklicken kann. Nach dem Anklicken eines Place-Buttons öffnet sich das entsprechende Stage-Feld 40 und das dazu gehörende Audience-Feld 42. Bei dem hier gezeigten Beispiel umfasst das Stage-Feld 40 mehr als einen Actor. Neben dem Actor 41 ist ein weiterer Actor 41b hinzugetreten. Dieser ist mit einem Friends-Icon 46 gekennzeichnet.

Bei dem hier gezeigten Beispiel umfasst der Place mehrere Stages. Über einen Stage-Reiter 49 wird der Zugriff auf eine weitere Stages des gerade ausgewählten Places ermöglicht.

Fig. 7c zeigt eine Version eines Place-Panels 50, bei dem die in dem Audience-Feld aufgeführten Teilnehmer kategorisiert sind. Bei dem hier gezeigten Actor-Feld sind Platzhalter 51 und 52 für weitere potentielle Actors vorgesehen. Das Audience-Feld 42 ist in ein Audience-Feld 53 für aktive Teilnehmer und in ein Audience-Feld 54 für passive Teilnehmer der Audience des Places, genauer gesagt der gerade aktiven Stage unterteilt. Damit sind unterschiedliche Zugriffs- oder Mitwirkungsrechte auf die mit dem Place verknüpften Kommunikationsvorgänge verbunden. Die in dem aktiven Audience-Feld 53 aufgeführten Teilnehmer können beispielsweise selbst in das Actor-Feld auf einen der Platzhalter 51 und 52 per Drag and Drop verschoben werden und selbst Actors werden. Für die Teilnehmer in dem passiven Audience-Feld 54 ist dies dann nicht möglich. Auch bei diesem Beispiel sind die Teilnehmer in den Audience-Feldern in Gastteilnehmer, eingetragene Teilnehmer und Friends-Teilnehmer unterschieden.

Eine zugangsbeschränkende Ergänzung des Place-Panels können Passwort- und/oder Ticketfunktionen sein. Bei einer Passwortfunktion ist der Zugang zu dem entsprechenden Place durch die Kenntnis eines Passwortes möglich, dass nur an einen bestimmten Teilnehmerkreis ausgegeben wird. Die Ticketfunktion erlaubt einen Zutritt zu dem betreffenden Place, sofern der Teilnehmer ein Bezahlen oder eine sonstige Handlung ausgeführt hat. Eine Ticketfunktion kann bei spielsweise auch darin bestehen, dass ein Teilnehmer nur dann einen Zugang erhält, wenn dieser eine bestimmte Anzahl eigener Freunde "mitbringt", d.h. zum Betreten des Places erfolgreich aufgefordert hat.

Fig. 8 zeigt einen beispielhaften Container für einen gemischten multi-connect und single-Modus mit einem Hauptmenü, das in dem nachfolgenden Beispiel als eine frei auf dem Bildschirm verschiebbare Menüleiste ausgebildet ist.

Dieser Container dient zur Darstellung, Steuerung und Ausführung der eigentlichen multimedialen Kommunikation und bildet somit den "Bildschirm" oder "Screen", der dem Teilnehmer präsentiert wird und über den ihm andere Teilnehmer und Actors erscheinen. Der Container enthält einen Screen 55 für eine Kommunikation im Multi-Connect-Modus, die beispielsweise mittels der in den Figuren 7a bis 7c gezeigten Panele initialisiert werden kann, und zwei Screens 56a und 56b für jeweils eine parallel dazu ablaufende Kommunikation im Single-Connect-Modus. Die so gegebene Splitscreen-Anzeige kann jederzeit in eine Fullscreen-Anzeige umgewandelt werden. Hierzu genügt beispielsweise ein Doppelklick auf den Screen 55 oder eine der beiden Screens 56a oder 56b. Mittels eines ZAP-Buttons 57 kann zwischen den einzelnen Kommunikationspartnern umgeschaltet werden. Dies erfolgt beispielsweise dadurch, dass durch Anklicken eines Screens (in diesem Beispiel Screen 55 bzw. Screen 56a) der Fokus des Zap-Buttons auf die jeweilige Verbindung gelegt wird. Betätigt der User nun den Zap Button, wird die Verbindung zum fokussierten Partner getrennt und eine Verbindung zu einem neuen Partner aufgebaut. Die Lautstärke jedes einzelen Screens läßt sich individuell regeln bzw. auf lautlos stellen.

Für eine detaillierte Benutzerführung, ein Verwalten der vorhergehend erwähnten Panels und zum Erzeugen von Rückmeldereaktionen dient ein Hauptmenü 58- Dieses ist mittels Mausbewegung frei am Bildschirm positionierbar und umfasst einige Buttons, die mittels eines Mausklicks betätigt werden können. Das Ha uptmenü kann in verschiedenen Formen ausgebildet sein.

Das Hauptmenü enthält insbesondere einen FS-Button 59 zum Umschalten auf einen Fullscreen-Modus, einen ZAP-Button 60 für das erwähnte Umschalten zwischen den jeweiligen Screens, einen Volume-Button 61 zur Lautstärkeregelung, einen Hilfe-Button 62 zum Aktivieren einer interaktiven Hilfe-Funktion bzw. zum Aufrufen von Tools, einen Profile-Button 63 zum Ein- und Ausblenden des eigenen Profilpanels oder des Profilpanels des jeweiligen anderen Teilnehmers, einen Textchat-Button 64 zum Ein- und Ausblenden bzw. Aktivieren- und Deaktivieren des Textchat-Panels. Weiterhin ist ein Friends-Button 65 zum Aktivieren und Deaktivieren des Friends-Panels, ein Place-Button 66 zum Aktivieren und Deaktivieren des Place-Panels und ein Games-Button 67 zum Aktivieren und Deaktivieren eines Games-Panel, beispielsweise der in Fig. 4a und 4b gezeigten Paint- und Morphing-Funktionen, vorgesehen.

Desweiteren enthält das Hauptmenü Mittel für eine Teilnehmerinteraktion, die parallel zur audivisuellen Kommunikation stattfindet. Dies sind insbesondere ein positiver Votingbutton 68 und ein negativer Votingbutton 69, mit denen der Teilnehmer entscheiden kann, ob er das auf dem Place ablaufende Geschehen gut oder schlecht findet. Ein Friendship-Button 70 dient zum Auslösen des vorhergehend beschriebenen Vorgangs zur Etablierung einer Friends-Beziehung zwischen Teilnehmern. Ein Blacklist-Button 71 fügt einen ausgewählten Teilnehmer einer erwähnten lokalen und/oder globalen Blackliste hinzu. Ein Child-Report-Button 72 meldet einen offenkundig minderjährigen Teilnehmer an einen Systemadministrator. Schließlich ist ein Schließen-Button 73 vorgesehen, mit dem sich die Menüleiste schließen oder ausblenden lässt.

Zusätzlich kann eine Pause-Funktion vorgesehen sein. Der Teilnehmer kann durch Anklicken eines entsprechenden Buttons die aktuelle Verbindung pausieren und halten, wobei die Kamera deaktiviert wird. Trennt sein Partner während des Pause-Zustandes die Verbindung, wird keine neue Verbindung zum pausierten Teilnehmer aufgebaut, bis er die Pause Funktion gelöst hat.
Er kann jedoch Nachrichten empfangen oder auf das Anklopfen eines Freundes reagieren. Ein Button für die Join Me Funktionalität kann ebenfalls in dem Hauptmenü integriert sein.

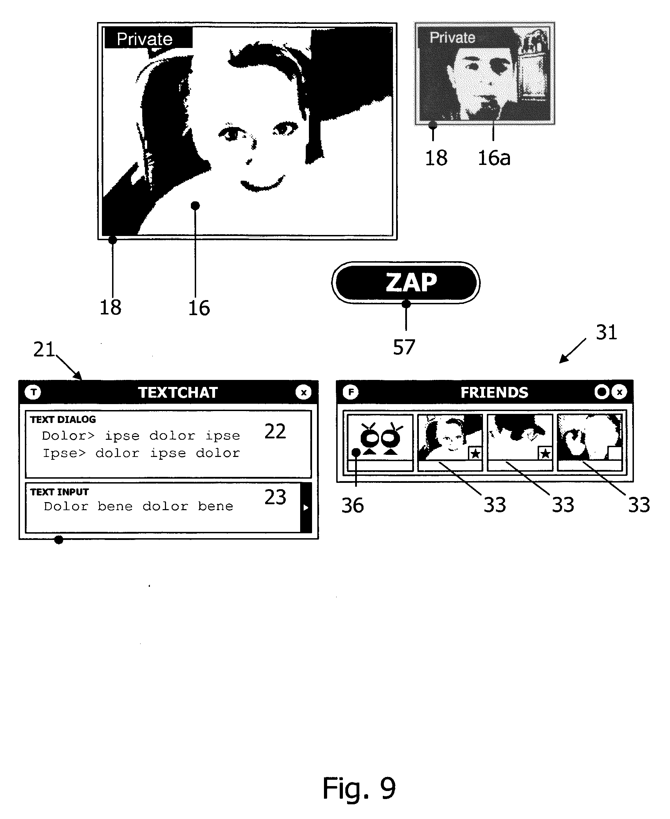

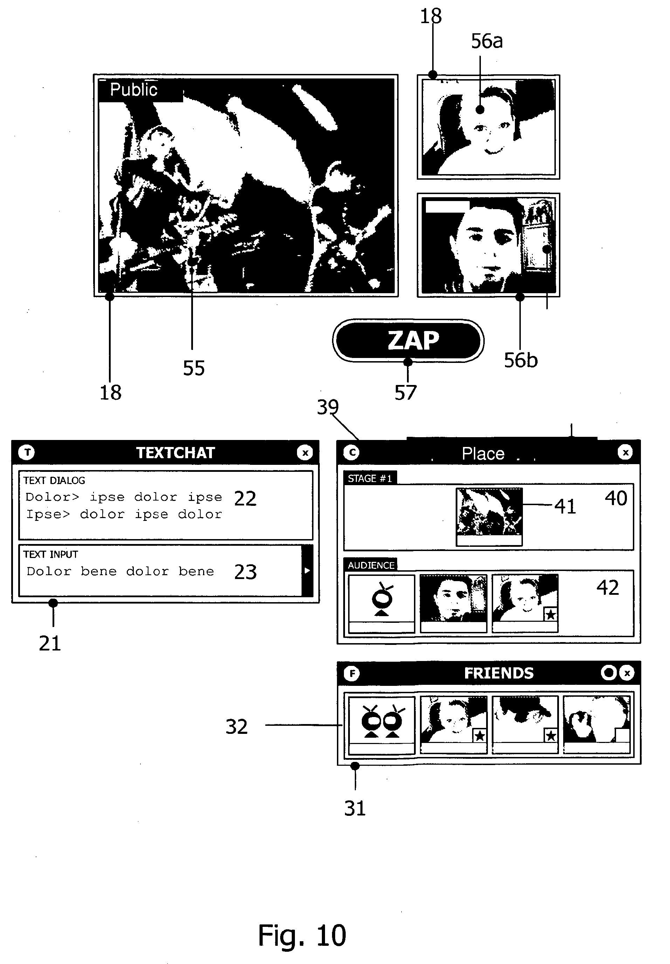

Nachfolgend werden beispielhaft einige zweckmäßige Kombinationen der vorhergehend erwähnten Panele für den Single- und Multiconnect-Modus dargestellt. Diese sind zweckmäßigerweise gleichzeitig geöffnet und verteilen sich in einer übersichtlichen Anordnung auf dem Bildschirm des Endgerätes des jeweiligen Teilnehmers. Fig. 9 zeigt ein beispielhaftes Setup für einen Single Connect, Fig. 10 für einen Multi Connect.

Das in Fig. 9 gezeigte Setup umfasst den Partner-Screen 16 mit dem Zoom-Rahmen 18 sowie einen kleineren Monitor-Screen 16a zur Wiedergabe des Teilnehmers im Erfassungsbereich der eigenen Webcam oder einer sonstigen Videoquelle. Der Monitor-Screen dient zur Kontrolle des eigenen Webcam- bzw. Videobildes. Dieser weist ebenfalls einen Zoom-Rahmen auf und lässt sich demnach auf eine für den Teilnehmer zweckmäßig erscheinende Größe einstellen.

In der Nähe der Partner- und Monitor-Screens befindet sich das Textchat-Panel 21 mit den entsprechenden Feldern 22 und 23 sowie das Friends-Panel 31 mit den als Friend definierten Teilnehmern. Schließlich ist der Zap-Button 57 vorhanden, mit dem die Kommunikation mit dem momentanen Teilnehmer beendet und eine Kommunikation mit einem anderen Teilnehmer gestartet werden kann. Diese kann, wie beschrieben, zufällig vermittelt sein oder durch ein Anklicken eines Teilnehmers in dem Friends-Panel bzw. einen Suchvorgang zustande kommen. Auch ein Übergang in den Multi-Connect-Modus kann davon begleitet sein.

Das in Fig. 10 gezeigte Setup für den Multi Connect Modus umfasst den in Fig. 8 beschriebenen Splitscreen aus den Screens 55 bzw. 56a und 56b. Einer der Screens 56a oder 56b kann dabei als ein Monitor-Screen ausgebildet sein. Dem Splitscreen ist der vorhergehend beschriebene ZAP-Button 57 zugeordnet, der ein Umschalten zwischen den jeweiligen Kommunikationspartnern ermöglicht. Diese Anordnung wird durch das Textchat-Panel 21 mit dem Textdialogfeld 22 und dem Texteingabefeld 23 ergänzt. Es können auch mehrere Textchat-Panels geöffnet sein, die jeweils einen eigenen Textchat mit jeweils einem eigenen Tei Inehmer ermöglichen. Einen weiteren Bestandteil bildet das bereits erwähnte Place-Panel 39 mit dem Stagefeld 40 und dem Audience Feld 42. Das Setup wird ergänzt durch das Friends Panel 31 mit der Galerie 32 und den entsprechenden bereits beschriebenen Merkmalen und Funktionalitäten.

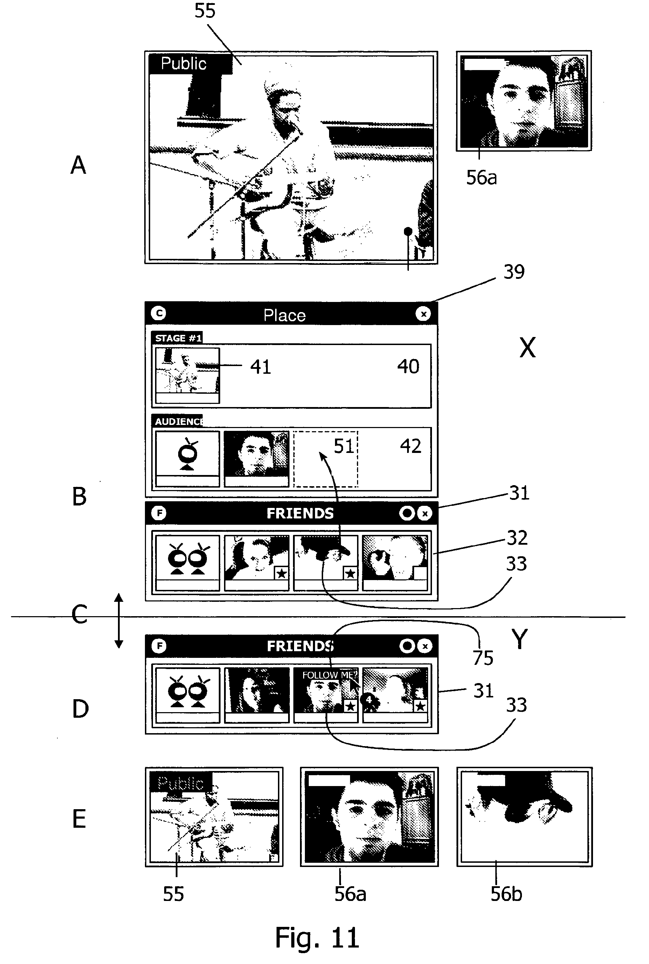

Fig. 11 zeigt ein Beispiel für die Drag und Drop Funktionalität zwischen den erläuterten Panelen am Beispiel eines Teilnehmer Events. Dabei setzt ein erster Tei Inehmer X eine Einladung für einen Place an einen anderen Teilnehmer Y ab, bei dem der zweite Teilnehmer Y durch den Teilnehmer X über einen Place informiert wird und neu in den Audience-Pool dadurch eintritt, dass er der von dem Teilnehmer X abgesetzten Information folgt.

Im Schritt A hat der Teilnehmer X einen Screen 55 geöffnet, in dem das Geschehen auf dem Place eines Actors verfolgt werden kann. Der Teilnehmer sieht sich selbst in seinem Monitor-Screen 56a. Dem Place ist wie beschrieben ein Place-Panel 39 mit dem Stage-Feld 40 und dem Audience-Feld 42 zugeordnet. Dort ist der betreffende Teilnehmer X aufgelistet. Zusätzlich hat der Teilnehmer X dessen Friends-Panel 31 geöffnet. In der dortigen Galerie 32 ist der Teilnehmer Y über dessen Profilbild 33 gelistet.

Der Teilnehmer X zieht nun in einem Schritt B mittels eines typischen Drag and Drop-Vorgang dieses Profilbild 33 aus der Galerie 32 des Friends-Panels in den Platzhalterbereich 51 des Audience-Feldes in dessen Place-Panel 39.

Aufgrund dessen wird in einem Schritt C eine Signalübertragung zwischen dem Teilnehmer X und dem Teilnehmer Y ausgeführt, die den Teilnehmer Y von diesem Drag and Drop-Vorgang in Kenntnis setzt. Dies erfolgt durch eine entsprechende Anzeige im Friends-Panel 31 des Teilnehmers Y. Der Teilnehmer X ist in dessen Galerie 32 seinerseits mit dessen Profilbild 33 gelistet. Im Ergebnis des durch den Teilnehmer X ausgeführten Drag und Drop-Vorgangs erscheint nunmehr in einem Schritt D auf dem Profilbild 33 des Teilnehmers X in der Friends-Galerie 32 des Teilnehmers Y ein Follow-Me-Marker 75, der dem Teilnehmer Y anzeigt, dass ihn der Teilnehmer X zum von ihm gefundenen Place eingeladen hat.

Über eine Bestätigung, beispielsweise einen Doppelklick auf den Marker 75, öffnet sich in einem Schritt E nun bei dem Teilnehmer Y ebenfalls der Screen 55 mit einem entsprechenden Monitor-Screen. Der Teilnehmer Y ist nun ebenfalls wie der Teilnehmer X ein Bestandteil des Audience-Pools des entsprechenden Actor s.

In einer entsprechenden Weise sind eine Vielzahl von derartigen Interaktionen sowohl zwischen den Teilnehmern untereinander als auch zwischen dem Actor und den Teilnehmern ausführbar. So ist es insbesondere möglich, einen Teilnehmer aus dem Place auszuschließen, indem dessen Profilbild per Drag und Drop aus dem Audience-Feld herausgezogen wird.

Das beschriebene Verfahren kann im Rahmen des erfindungsgemäßen Grundgedankens mit weiteren Merkmalen und Ausführungsformen ausgestaltet werden. Weitere Ausführungsformen ergeben sich aus den Unteransprüchen.

Nachfolgend sollen wichtige, in der Beschreibung verwendete Begriffe noch einmal kurz erläutert und definiert werden:
Account: beschreibt die Identität eines Teilnehmers im PZ-Netz. Der Account beinhaltet Anmeldedaten, Kontakte (Friends), das Teilnehmerprofil, vermittlungs- bzw. verwaltungsrelevante Daten und sonstige Einträge.
Actor: Teilnehmer, der seinen Mediastream für ein breites Publikum, die so genannten Viewer, zugänglich macht. Ein Actor ist durch eine "Public"-Nutzerstatusanzeige in seinem Screen gekennzeichnet.
Audience: die Menge aller Teilnehmer, die an einem Multiconnect als Viewer teilnehmen.
Audiostreaming: Streaming von Mikrofon-unabhängigen Audioquellen zwischen Teilnehmern im PZ-Netz.
Blackliste: Liste blockierter (unerwünschter) Teilnehmer
Place: Sendeplatz, der permanent erreichbar, und mit 1-n Shows bespielbar ist.
Childlist: Systeminterne Liste zur Sperrung Minderjähriger. Teilnehmer haben die Möglichkeit, die Benutzung durch Kinder dem System zu melden. Clients, die somit gemeldet worden sind, werden blockiert.
Connect: Verbindung von Teilnehmern innerhalb des Verfahrens.
Container: Teil einer graphischen Benutzeroberfläche, Behälter für zusammengehörende Elemente.
Curtain: Wartebildschirm vor Beginn einer Show.
Dislike-Tags: Frei definierbare Stichwörter zur Beschreibung von Antipathien ("Ich mag nicht...")
Fokus: Auswahl bestimmter GUI-Bereiche für Nutzeraktionen
Friend: Gespeicherter Kontakt eines Teilnehmers
Friends-Panel: Sammlung aller gespeicherten Kontakte (Friends) eines Teilnehmers.
Globale Blackliste: Liste aller Teilnehmer, die durch eine spezifische Teilnehmerzahl n kontinuierlich blockiert werden.
Index: Datenstruktur zur performanten Berechnung der Relevanz eines zu vermittelnden Partners.

Information Retrieval: Information Retrieval (IR) ist eine interdisziplinäre Wissenschaft (Mathematik, Informatik, Linguistik) und Teilgebiet der informationsverarbeitenden Technologien, die verschiedene Technologien der Informationssuche /-rückgewinnung zusammenfasst. Dabei zeichnen sich das Informationsbedürfnis und die zu verarbeitenden Informationen durch folgende Charakteristika aus:
- Vagheit: diffuses, nicht formalisierbares Informationsbedürfnis (natürliche Sprache) des Nutzers
- Unsicherheit: das verarbeitende System besitzt keine Kenntnis des inhaltlichen Zusammenhangs der Daten/Informationen

Allen IR-Systemen gemein ist die Nutzung eines Index, in dem die zur Suche verfügbaren Daten als Ergebnis der Informationsvorverarbeitung und reduktion abgebildet sind. Dadurch wird die effiziente Suche ermöglicht.
Jingle: Vom Teilnehmer frei bestimmbares, kurzes Audiofile, das bei jedem neuen Kontakt beim Gesprächspartner abgespielt wird. Bildet einen Teil der Selbstdarstellung.
Lokale Blackliste: Liste aller Teilnehmer, die durch einen Teilnehmer kontinuierlich geblockt wurden.
Like-Tags: Frei definierbare Stichwörter zur Beschreibung von Sympathien ("Ich mag...").
Link-Tag: Adressierungs-Tag um bestimmte Partner und Inhalte (Channels, Shows) direkt anzuwählen.
Main Pool: Gesamtheit aller Teilnehmer, Channels und Shows, die gerade im PZ-Netz online sind.
Matching Modul: PZ-Systemkomponente.
Aufgaben:
- Bewertung der gesammelten Teilnehmerinformationen (Profile, Teilnehmerverhalten, Voting)
- Katalogisierung der Teilnehmer/Channels/Shows in entsprechende Subpools
- Verbindung anfragender Teilnehmer mit dem jeweils passenden Subpool
Media-Stream: Oberbegriff für Video-, Audio- und Textstreams.
Multi-Connect: Für mehrere Nutzer zugänglicher Mediastream.
Beim Multi-Connect treten ein oder mehrere Teilnehmer als Actor(s) ("Veranstalter") auf. Eine maximal unbegrenzte Anzahl Teilnehmer können den entsprechenden Mediastream empfangen.
Nickname: Frei definierbarer, jedoch nur einmal zu vergebener Name eines Teilnehmers.
Partner: Aktiver Verbindungspartner im Netz.
Partner Screen: Screen des aktuellen Dialog-Partners in einem One-to-One-Connect.
People Zine: Online-Magazin für Teilnehmer. Enthält Veranstaltungskalender für Shows innerhalb des PZ-Systems, redaktionelle Beiträge und Werbeflächen für PZ-Channels.
Pool: Menge einer bestimmten Teilnehmergruppe.
Profil: Selbstdarstellungs- und Informationsplattform für Teilnehmer. Einstellungsbereich für Verbindungspräferenzen.
Sammelformular für persönliche Tags.
PZ-Client: Client-seitige PZ-Anwendung. Regelt alle lokalen Aufgaben des PZ-Systems auf der Teilnehmer-Seite. (Empfang und Versand von Mediastreams, Sarnmeln von Teilnehmerdaten, Teilnehmerseitige Verwaltung von Connects und gespeicherten Partnern).
PZ-Flyer: Digitaler Werbeflyer für Shows.
PZ-Games: Online Spiele, die während eines Connects für PZ-Teilnehmer verfügbar sind.
Ranking: Einstufung der Nützlichkeit eines Connects.
Ergibt sich aus dem globalen Vote und/oder der Relevanz vorhandener Tags bezüglich einer Teilnehmer-Anfrage.
Slogan: Vom Teilnehmer definierter Selbstdarstellungs-Text, der jedem Kontakt angezeigt wird.
Stage: Subpool, bestehend aus 1-n Sendern, die in einem Place einzeln, oder als Composite-Splitscreen an m Zuschauer streamen.
Subpool: Definierte Teilmenge des Mainpools.
Tag: Stichwörter, die helfen, den Nutzer und seine Interessen zu beschreiben.

Sie werden genutzt um eine möglichst hilfreiche Vermittlung zwischen Teilnehmern mit gleichen Interessen zu gewährleisten.
Textchat: Kommunikation über Echtzeit-Textnachrichten.
Viewer: PZ-Teilnehmer, der in einem Place aktiv und passiv teilnimmt.
Vote: Ergebnis des Votings. Das lokale Vote betrachtet dabei nur den Nutzer, der sich am Voting beteiligt. Das globale Vote bezeichnet das letztendliche Ranking des Connects.
Voting: Prozess des Bewertens eines Partners.
WHOAMI-Tags: Selbstbeschreibungs-Stichwörter eines PZ-Teilnehmers.
Zapping: Abbruch des laufenden Kontakts und Aufbau einer neuen Verbindung.

### Bezugszeichenliste

- 1: Internet
- 2: Endgerät
- 3: Server
- 3a: Applikation Server
- 3b: Teilnehmerdatenbank
- 3c: Streaming Server
- 3d: Lastausgleichsserver
- 3e: Web Server
- 4: Programmmittel für Datenbankbetrieb
- 5: Verbindungsschicht
- 6: Teilnehmerschicht
- 7: Frontendschicht
- 9a: single connect Teilnehmer
- 9b: Teilnehmer im one-to-many-Connect-Modus
- 9e: isolierte Teilnehmer
- 9f: ungebundene Teilnehmer
- 10: Mainpool
- 11a: single connect Subpool
- 11b: multi connect Subpool
- 11c: äußerer Subpool
- 11d: innerer Subpool
- 11e: isolierter Subpool
- 13: Fenster für Mediastream
- 13a: Paint-Verzierungen
- 15: Fenster für Mediastream
- 15a: Morph-Verzerrungen
- 16: Partner-Screen
- 16a: Monitor-Screen
- 17: Textfeld
- 18: Zoom-Rahmen
- 19: Public-Symbol
- 20: Actor-Screen
- 21: Textchat-Panel
- 22: Textdialog-Feld
- 23: Texteingabe-Feld
- 24: Profil-Panel
- 25: Feld für persönliche Daten
- 26: Profilbild
- 26a: Reiter
- 27: Tag-Feld
- 27a: WhoAmI-Tags
- 27b: Like-Tags
- 27c: Dislike-Tags
- 28: Slogan-Feld
- 28a: Jingle-Feld
- 29: Link-Feld
- 30: Image-Feld mit Galerie
- 31: Friends-Panel
- 32: Friends-Galerie
- 33: Textfeld
- 34: offline/online-Marker
- 35: aktiv/inaktiv-Marker
- 36: Friends-Kontakt-Knopf
- 37: initiierender Teilnehmer
- 38: Friends-Symbol
- 38a: hinzugefügter Friends-Kontakt
- 39: Place-Panel
- 40: Stage-Feld
- 41: Profilbild, Actor
- 41b: Profilbild, weiterer Actor
- 42: Audience-Feld
- 43: Gastteilnehmer, anonym
- 44: Teilnehmer, eingetragen
- 45: Friends-Teilnehmer
- 46: Friends-Icon
- 47: Place-Panel für mehrere Stages
- 48: Place-Button
- 49: Stage-Reiter
- 50: Place-Panel mit kategorisierter Audience
- 51: Platzhalter
- 52: weiterer Platzhalter
- 53: Audience-Feld, aktive Teilnehmer
- 54: Audience-Feld, passive Teilnehmer
- 55: Screen für Multi-Connect-Modus
- 56a: erster Single-Connect-Screen
- 56b: zweiter Single-Connect-Screen
- 57: ZAP-Button
- 58: Menüleiste
- 59: Fullscreen-Button
- 60: verkleinerter ZAP-Button
- 61: Volume-Button
- 62: Hilfe-Button
- 63: Profile-Button
- 64: Textchat-Button
- 65: Friends-Button
- 66: Place-Button
- 67: Games-Button
- 68: Voting-Button, positiv
- 69: Voting-Button, negativ
- 70: Friendship-Button
- 71: Blacklist-Button
- 72: Childreport-Button
- 73: Schließen-Button
- 75: Follow-Me-Marker

## Patentansprüche

1. Verfahren zum Ausführen einer auf einem Netzwerkprotokoll, insbesondere TCP/IP und/oder UDP, aufbauenden multimedialen Kommunikation, insbesondere eines Video-, Audio- und/oder Text-Chats, zwischen einer Gesamtheit von in einem Kommunikationsnetz (1) angeordneten Endgeräten (2), wobei
durch mindestens einen Teilnehmer ein personalisiertes Nutzer-Account in Form eines virtuellen Teilnehmerprofils auf einem Server (3) oder in einem Peer-to-Peer-Netzwerk erzeugt wird, hierfür
an jedem der Endgeräte über ein Einrichten des virtuellen Teilnehmerprofils ein Einrichten der multimedialen Kommunikation erfolgt, **dadurch gekennzeichnet, dass**
über das Teilnehmerprofil ein Modus einer der Kommunikation vorausgehenden Teilnehmerwahl, ein Kommunikationstyp und/oder eine Anzahl von mit einem der Endgeräte bestehenden Kommunikationsverbindungen und/oder die Art der bei der Kommunikation erfolgenden Datenübertragung frei festgelegt wird, wobei der Modus der Teilnehmerwahl ein Zufallsverfahren zum Herstellen einer Kommunikationsverbindung zwischen einem wählenden Endgerät eines ersten Teilnehmerprofils zu mindestens einem weiteren Endgerät eines zufälligen Teilnehmerprofils sowie
ein aktivierbares Aufrufverfahren zum Herstellen einer Kommunikationsverbindung zwischen dem wählenden Endgerät des ersten Teilnehmerprofils zu mindestens einem weiteren Endgerät eines in einer Auswahlliste gespeicherten Teilnehmerprofils enthält, wobei diese Teilnehmer einen offenen oder geschlossenen Teilnehmer-Subpool bilden und die Teilnehmer eine in mehrere Teilmengen unterteilbare Gesamtmenge bilden, wobei durch Eintragungen in dem Teilnehmerprofil die Teilnehmer und Kontakte zu anderen Teilnehmern willkürlich klassifizierbar sind, und durch die Klassifizierungen eine Reihe von durch den Typ der Kommunikation unterscheidbarer Subpools als Teilmengen eines Mainpools ausgebildet werden kann.

2. Verfahren nach Anspruch 1,
**dadurch gekennzeichnet, dass**
der Modus der Teilnehmerwahl ein aktivierbares Zufall- oder Suchverfahren zum Herstellen einer Kommunikationsverbindung zwischen dem wählenden Endgerät des ersten Teilnehmerprofils zu mindestens einem weiteren Endgerät eines durch ein Eingeben von Suchparametern und/oder systemseitiger Analyse von Ähnlichkeitsparametern ermittelten Teilnehmerprofils enthält.

3. Verfahren nach einem der Ansprüche 1 oder 2,
**dadurch gekennzeichnet, dass**
der Modus der Teilnehmerwahl eine aktivierbare Blockierfunktion zum Vermeiden und/oder Abweisen eine Kommunikationsanfrage von dem wählenden Endgerät des ersten Teilnehmerprofils zu mindestens einem weiteren Endgerät eines in einer Blackliste gespeicherten Teilnehmerprofils enthält.

4. Verfahren nach einem der Ansprüche 1 bis 3,
**dadurch gekennzeichnet, dass**
über das Einrichten des Teilnehmerprofils der Typ der bestehenden Kommunikation an jedem der Endgeräte zwischen einem One-to-one-Typ, einem One-to-many-Typ, einem Many-to-one-Typ oder einem Many-to-many-Typ umschaltbar ist.

5. Verfahren nach einem der vorhergehenden Ansprüche,
**dadurch gekennzeichnet, dass**
die frei wählbare Art der bei der Kommunikation erfolgenden Datenübertragung eine Auswahl zwischen einer Kommunikation in Echtzeit und/oder einem Senden bzw. Empfangen eines vorab aufgezeichneten Streams enthält.

6. Verfahren nach einem der vorhergehenden Ansprüche,
**dadurch gekennzeichnet, dass**
die frei wählbare Art der bei der Kommunikation erfolgenden Datenübertragung eine Auswahl zwischen verschiedenen Kommunikationskanälen, insbesondere einem Video-, einem Audio- und/oder einem Textkanal, sowie einem Kanal für einen Dateitransfer oder einen gemeinsamen Zugriff auf Webanwendungen enthält.

7. Verfahren nach einem der vorhergehenden Ansprüche,
**dadurch gekennzeichnet, dass**
die multimediale Kommunikation durch einen zusätzlichen Informations- und Rückmeldungskanal ergänzt ist.

8. Verfahren nach einem der vorhergehenden Ansprüche,
**dadurch gekennzeichnet, dass**
die in dem Kommunikationsnetz angeordneten Endgeräte und die zwischen den Endgeräten ausgeführte Kommunikation durch einen Server oder ein Peer-to-peer-Netzwerk verwaltet werden, wobei über das mindestens eine durch den Server oder das Peer-to-peer-Netzwerk verwaltete Teilnehmerprofil eine logische Zuordnung zwischen jeweils mindestens einem Endgerät und einem das Endgerät nutzenden Teilnehmer ausgeführt wird und eine Adressierung des jeweiligen Endgerätes über die logische Zuordnung des Endgerätes zum Teilnehmerprofil erfolgt.

9. Verfahren nach einem der vorhergehenden Ansprüche,
**dadurch gekennzeichnet, dass**
durch das mindestens eine Teilnehmerprofil Tag-Variablen und/oder durch systemseitige Analyse ermittelte Ähnlichkeitsparameter zum Festlegen grundlegender Kommunikationsfunktionen, insbesondere für Freigabe- und Sperrfunktionen, gesetzt und verändert werden.

10. Verfahren nach einem der vorhergehenden Ansprüche,
**dadurch gekennzeichnet, dass**
durch das mindestens eine Teilnehmerprofil mindestens ein Link zu mindestens einem weiteren Teilnehmerprofil und/oder einem Stream, eingegeben und verändert wird.

11. Verfahren nach einem der vorhergehenden Ansprüche,
**dadurch gekennzeichnet, dass**
in das mindestens eine Teilnehmerprofil ein durch einen Teilnehmer und/oder einen Systemadministrator erfolgendes Einbinden eigener Daten oder Daten von Drittanbietern, insbesondere Dateien, Plugins und Internetdiensten, ausführbar ist.

12. Verfahren nach einem der vorhergehenden Ansprüche,
**dadurch gekennzeichnet, dass**
zum Ausführen des Verfahrens Mittel zum Erzeugen und Betreiben einer graphischen Benutzeroberfläche zur Anwendung kommen.

13. Anordnung zum Ausführen eines Verfahrens nach einem der vorhergehenden Ansprüche,
umfassend ein Kommunikationsnetz mit einem gültigen Kommunikationsprotokoll, insbesondere das Internet (1), eine Vielzahl von Endgeräten (2) mit Mitteln zum Senden und Empfangen multimedialer Inhalte und einen Server (3) oder ein Peer-to-peer-Netzwerk mit Mitteln zum Betreiben einer hierarchischen Schichtstruktur aus einer Datenbankschicht (4) zum Verwalten von Teilnehmerdaten, Endgeräteadressen und multimedialen Inhalten, einer Verbindungsschicht (5) zum Ausführen einer vermittelten Kommunikation zwischen den Endgeräten, einer Teilnehmerschicht (6) zum Betreiben von durch die Nutzer der Endgeräte einrichtbarer Teilnehmerprofile und eine Frontendschicht (7) mit Mitteln zum Erzeugen und Betreiben einer graphischen Benutzeroberfläche.

## Claims

1. A method for carrying out a multimedia communication based on a network protocol, especially TCP/IP and/or UDP, especially a video, audio and/or text chat, between an entirety of terminals (2) arranged in a communication network (1), wherein a personalized user account in the form of a virtual subscriber profile is generated by at least one subscriber on a server (3) or in a peer-to-peer network, wherein a setup of the multimedia communication occurs on each of the terminals via the setup of the virtual subscriber profile, **characterized in that** a mode of a subscriber selection preceding the communication, a communication type and/or a number of communication links to one of the terminals and/or the type of data transmission employed for the communication are freely defined via the subscriber profile, wherein the subscriber selection mode includes a random process for setting up a communication link between a selecting terminal of a first subscriber profile to at least another terminal of a random subscriber profile, and
an activatable polling process for establishing a communication link between the selecting terminal of the first subscriber profile to at least one further terminal of a subscriber profile stored in a selection list, wherein said subscribers form an open or closed subscriber subpool and the subscribers form a total quantity that can be divided into several subsets, wherein the subscribers and contacts to other subscribers can be classified randomly by entries in the subscriber profile, and as a result of the classifications a number of subpools that can be distinguished by the type of communication can be formed as subsets of a main pool.

2. A method according to claim 1, **characterized in that** the subscriber selection mode includes an activatable random or search process for establishing a communication link between the selecting terminal of the first subscriber profile to at least another terminal of a subscriber profile determined by entering search parameters and/or analysis of similarity parameters on the system level.

3. A method according to one of the claims 1 or 2, **characterized in that** the subscriber selection mode includes an activatable blocking function for avoiding and/or rejecting a communication request from the selecting terminal of the first subscriber profile to at least another terminal of a subscriber profile stored in a blacklist.

4. A method according to one of the claims 1 to 3, **characterized in that** the setup of the subscriber profile allows that the type of the current communication can be switched at each of the terminals between a one-to-one type, a one-to-many type, a many-to-one type and a many-to-many type.

5. A method according to one of the preceding claims, **characterized in that** the freely selectable type of the data transmission taking place during the communication includes a selection between a communication in real time and/or a transmission and receipt of a previously recorded stream.

6. A method according to one of the preceding claims, **characterized in that** the freely selectable type of the data transmission taking place during the communication includes a selection between different communication channels, especially a video, an audio and/or a text channel, and a channel for a file transfer or a common access to web applications.

7. A method according to one of the preceding claims, **characterized in that** the multimedia communication is supplemented with an additional information and acknowledgment channel.

8. A method according to one of the preceding claims, **characterized in that** the terminals arranged in the communication network and the communication executed between the terminals are managed by a server or by a peer-to-peer network, wherein the at least one subscriber profile, which is managed by the server or the peer-to-peer network, executes a logical assignment between at least one terminal and a subscriber using the terminal, and the respective terminal is addressed by the logical assignment of the terminal to the subscriber profile.

9. A method according to one of the preceding claims, **characterized in that** the setting and altering of tag variables and/or similarity parameters, which are determined by an analysis on the system side, for defining basic communication functions, in particular for enable and blocking functions, are set and changed by the at least one subscriber profile.

10. A method according to one of the preceding claims, **characterized in that** the input and alteration of at least one link to at least one other subscriber profile and/or a stream are entered and changed by the at least one subscriber profile.

11. A method according to one of the preceding claims, **characterized in that** an incorporation by a subscriber and/or a system administrator of own data or data of third providers, in particular files, plug-ins and internet services, into the at least one subscriber profile can be executed.

12. A method according to one of the preceding claims, **characterized in that** means for generating and operating a graphical user interface are used for executing the method.

13. An arrangement for executing a method according to one of the preceding claims, comprising a communication network with a valid communication protocol, in particular the internet (1), a plurality of terminals (2) having means for transmitting and receiving multimedia contents, and a server (3) or a peer-to-peer network having means for operating a hierarchical layer structure consisting of a database layer (4) for managing subscriber data, terminal addresses and multimedia contents, a link layer (5) for executing a switched communication between the terminals, a subscriber layer (6) for operating subscriber profiles that can be set up by the users of the terminals, and a front end layer (7) having means for generating and operating a graphical user interface.

## Revendications

1. Procédé pour réaliser une communication multimédia reposant sur un protocole de réseau, en particulier TCP/IP et/ou UDP, en particulier une discussion en direct en vidéo, audio ou texte, entre un ensemble de terminaux (2) disposés dans un réseau de communication (1), dans lequel
au moins un participant crée un compte d'utilisateur personnalisé sous la forme d'un profil de participant virtuel sur un serveur (3) ou dans un réseau de pair à pair,
ce pour quoi la communication multimédia est paramétrée pour cela sur chacun des terminaux par un paramétrage du profil de participant virtuel,
**caractérisé en ce qu'**un mode de choix de participants avant la communication, un type de communication et/ou un nombre de connexions de communication avec l'un des terminaux et/ou le type de transmission de données réalisé lors de la communication sont définis librement à l'aide du profil de participant,
le mode de choix de participants comprenant un procédé aléatoire d'établissement d'une connexion de communication entre un terminal appelant d'un premier profil de participant et au moins un autre terminal d'un profil de participant au hasard et
un procédé d'appel activable pour établir une connexion de communication entre le terminal appelant du premier profil de participant et au moins un autre terminal d'un profil de participant enregistré dans une liste de sélection, ces participants formant un sous-groupe de participants ouvert ou fermé et les participants formant un ensemble qui peut être divisé en plusieurs sous-ensembles, des entrées dans le profil de participant permettant de classifier les participants et les contacts avec d'autres participants de façon arbitraire et de former à l'aide des classifications une série de sous-groupes pouvant être différenciés par le type de communication qui forment des sous-ensembles d'un groupe principal.

2. Procédé selon la revendications 1, **caractérisé en ce que** le mode de choix de participants comprend un procédé aléatoire ou de recherche activable pour établir une connexion de communication entre le terminal appelant du premier profil de participant et au moins un autre terminal d'un profil de participant déterminé par la saisie de paramètres de recherche et/ou l'analyse de paramètres de similitude par le système.

3. Procédé selon l'une des revendications 1 ou 2, **caractérisé en ce que** le mode de choix de participants comprend une fonction de blocage activable pour éviter et/ou rejeter une demande de communication du terminal appelant du premier profil de participant vers au moins un autre terminal d'un profil de participant enregistré dans une liste noire.

4. Procédé selon l'une des revendications 1 à 3, **caractérisé en ce que** le paramétrage du profil de participant permet de changer le type de communication existant sur l'un des terminaux entre un type à origine et destination uniques, un type à origine unique et destinations multiples, un type à origines multiples et destination unique ou un type à origine et destinations multiples.

5. Procédé selon l'une des revendications précédentes, **caractérisé en ce que** le mode librement sélectionnable de transmission de données pendant la communication comprend une sélection entre une communication en temps réel et/ou une émission ou une réception d'un flux de données enregistré au préalable.

6. Procédé selon l'une des revendications précédentes, **caractérisé en ce que** le mode librement sélectionnable de transmission de données pendant la communication comprend une sélection entre différents canaux de communication, en particulier un canal vidéo, un canal audio et/ou un canal de texte, ainsi qu'un canal pour un transfert de données ou un accès commun à des applications en base Web.

7. Procédé selon l'une des revendications précédentes, **caractérisé en ce que** la communication multimédia est complétée par un canal d'information et de rétrosignalisation supplémentaire.

8. Procédé selon l'une des revendications précédentes, **caractérisé en ce que** les terminaux disposés dans le réseau de communication et la communication réalisée entre les terminaux sont administrés par un serveur ou un réseau de pair à pair, l'au moins un profil de participant administré par le serveur ou le réseau de pair à pair réalisant une association logique entre au moins un terminal à la fois et un participant utilisant le terminal et un adressage de chaque terminal étant réalisé à l'aide de l'association logique du terminal au profil de participant.

9. Procédé selon l'une des revendications précédentes, **caractérisé en ce que** des variables de balises et/ou des paramètres de similitude déterminés par l'au moins un profil de participant ou par l'analyse par le système sont définis et modifiés afin de déterminer des fonctions de communication fondamentales, en particulier des fonctions d'autorisation et de blocage.

10. Procédé selon l'une des revendications précédentes, **caractérisé en ce que** l'au moins un profil de participant permet de créer et de modifier au moins une liaison entre un autre profil de participant et/ou un flux de données.

11. Procédé selon l'une des revendications précédentes, **caractérisé en ce que** des données propres ou des données de tiers, en particulier des fichiers, des modules complémentaires (*plug-ins*) et des services Internet, peuvent être intégrés dans l'au moins un profil de participant par un participant et/ou un administrateur du système.

12. Procédé selon l'une des revendications précédentes, **caractérisé en ce que** l'exécution du procédé met en oeuvre des moyens pour créer et faire fonctionner une interface utilisateur graphique.

13. Disposition pour l'exécution d'un procédé selon l'une des revendications précédentes, comprenant un réseau de communication avec un protocole de communication valide, en particulier l'internet (1), plusieurs terminaux (2) avec des moyens pour émettre et recevoir des contenus multimédia et un serveur (3) ou un réseau de pair à pair avec des moyens pour exploiter une structure de couches hiérarchisée à partir d'une couche de base de données (4) pour administrer des données de participants, des adresses de terminaux et des contenus multimédia, d'une couche de liaison (5) pour exécuter une communication transmise entre les terminaux, d'une couche de participants (6) pour exploiter des profils de participants qui peuvent être créés par les utilisateurs des terminaux et d'une couche frontale (7) avec des moyens pour créer et faire fonctionner une interface utilisateur graphique.
